(19) Europäisches Patentamt
European Patent Office
Office européen des brevets

(11) **EP 4 366 244 A1**

(12) **EUROPEAN PATENT APPLICATION**
published in accordance with Art. 153(4) EPC

(43) Date of publication:
**08.05.2024 Bulletin 2024/19**

(21) Application number: **22860240.5**

(22) Date of filing: **09.08.2022**

(51) International Patent Classification (IPC):
*H04L 12/28* (2006.01)   *H04L 65/80* (2022.01)
*H04L 65/612* (2022.01)   *H04N 21/20* (2011.01)

(52) Cooperative Patent Classification (CPC):
**H04L 65/612; H04L 45/124; H04L 65/762;**
**H04L 65/80; H04L 69/24; H04N 21/43076;**
**H04N 21/44227; H04N 21/8113;** H04L 12/2803;
H04L 45/22; H04L 45/306; H04L 67/12;
H04M 1/72442

(86) International application number:
**PCT/CN2022/111117**

(87) International publication number:
**WO 2023/024894 (02.03.2023 Gazette 2023/09)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **27.08.2021 CN 202110993559**

(71) Applicant: **Huawei Technologies Co., Ltd.**
**Longgang**
**Shenzhen, Guangdong 518129 (CN)**

(72) Inventors:
• **LI, Shuwei**
  **Shenzhen, Guangdong 518129 (CN)**
• **SUN, Yuan**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **MULTI-DEVICE SYNCHRONOUS PLAYBACK METHOD AND APPARATUS**

(57) This application relates to the field of audio technologies, and discloses a multi-device synchronous playing method and an apparatus, to improve efficiency of multi-device synchronous audio playing. The method is as follows: A first terminal device obtains transit capability evaluation values of N second terminal devices, where N is a positive integer. The first terminal device obtains transit availability of the N second terminal devices relative to the first terminal device based on the N transit capability evaluation values. The first terminal device selects a target transmission path from N transmission paths based on the transit availability of the N second terminal devices relative to the first terminal device, where the N transmission paths one-to-one correspond to the N second terminal devices. The first terminal device obtains to-be-played audio data from a second terminal device corresponding to the target transmission path.

FIG. 5

**Description**

**CROSS-REFERENCE TO RELATED APPLICATIONS**

This application claims priority to Chinese Patent Application No. 202110993559.9, filed with the China National Intellectual Property Administration on August 27, 2021 and entitled "MULTI-DEVICE SYNCHRONOUS PLAYING METHOD AND APPARATUS", which is incorporated herein by reference in its entirety.

**TECHNICAL FIELD**

Embodiments of this application relate to the field of audio technologies, and in particular, to a multi-device synchronous playing method and an apparatus.

**BACKGROUND**

With development of smart network technologies, there are increasingly more multi-device collaborative management scenarios, to bring better user experience to users. For example, on the basis that there are a plurality of devices that can be configured to play an audio in a local area network, for example, a home, there are increasingly more scenarios in which a plurality of different devices are used to perform synchronous audio playing.

However, due to factors such as different placement positions and different network signal statuses of different devices, multi-device synchronous audio playing is limited to some extent during implementation, resulting in poor user experience. For example, because it takes a long time for one of a plurality of devices to obtain to-be-played audio data, play start waiting time of multi-device synchronous playing is long, or a problem like freezing occurs during synchronous playing.

Therefore, how to improve efficiency of multi-device synchronous audio playing is worth researching.

**SUMMARY**

Embodiments of this application provide a multi-device synchronous playing method and an apparatus, to resolve a limitation imposed on implementation of multi-device synchronous audio playing in a conventional technology.

According to a first aspect, an embodiment of this application provides a multi-device synchronous playing method. The method includes: A first terminal device obtains transit capability evaluation values of N second terminal devices, where N is a positive integer. The first terminal device obtains transit availability of the N second terminal devices relative to the first terminal device based on the N transit capability evaluation values. The first terminal device selects a target transmission path from N transmission paths based on the transit availability of the N second terminal devices relative to the first terminal device, where the N transmission paths one-to-one correspond to the N second terminal devices. The first terminal device obtains to-be-played audio data from a second terminal device corresponding to the target transmission path. Optionally, it is assumed that higher transit availability of the second terminal device relative to the first terminal device indicates higher transmission efficiency, stability, and reliability of the transmission path, corresponding to the second terminal device, selected by the first terminal device as the target transmission path. When determining the target transmission path, the first terminal device may preferentially select a second terminal device with higher transit availability relative to the first terminal device.

According to the method provided in this application, in an application scenario of multi-device synchronous playing, in this embodiment of this application, a transit capability of a terminal device included in the application scenario is evaluated, and the transit capability is used to determine whether the terminal device can be used as a transit node for another terminal device to obtain to-be-played audio data. This provides a plurality of optional transmission paths for another terminal device, and implements path optimization. In comparison with the conventional technology in which each terminal device obtains, from a router, a transmission manner of to-be-played audio data, in this embodiment of this application, efficiency, stability, reliability, and the like of obtaining same to-be-played audio data by a plurality of terminal devices can be improved, to improve user experience of multi-device synchronous playing.

In a possible design, that the first terminal device obtains transit availability of the N second terminal devices relative to the first terminal device based on the N transit capability evaluation values may be implemented as follows: The first terminal device determines N relative signal strengths corresponding to the N second terminal devices. The first terminal device separately allocates transit availability weight factors to the N second terminal devices based on the N relative signal strengths. For an $i^{th}$ second terminal device, the first terminal device uses a product of a transit capability evaluation value and a transit availability weight factor of the $i^{th}$ second terminal device as transit availability of the $i^{th}$ terminal device, where i is any positive integer from 1 to N. Optionally, it is assumed that a larger relative signal strength of the second terminal device indicates higher transit availability of the second terminal device relative to the first terminal device. The first terminal device may allocate a larger transit availability weight factor to the second terminal device with a larger relative signal strength.

In this design, the first terminal device allocates different transit availability weight factors to different second terminal devices based on a relative relationship between the first terminal device and each second terminal device, to improve transit availability of a second terminal device with a good relative relationship. This ensures accuracy of selecting the target transmission path.

In a possible design, the first terminal device may alternatively transit the to-be-played audio data to another terminal device. This may be determined based on a transit capability evaluation value of the first terminal device. The design may be implemented as follows: The first terminal device determines a first transit capability evaluation value of the first terminal device based on a first evaluation parameter group. The first evaluation parameter group includes one or a combination of the following evaluation parameters: a network signal strength of the first terminal device, a network transmission status of the first terminal device, a type of the first terminal device, a usage status of the first terminal device, and an energized frequency of the first terminal device. If the first transit capability evaluation value meets a preset transit capability threshold condition, the first terminal device sends the first transit capability evaluation value and the like. It may be understood that before the first terminal device obtains the transit capability evaluation values of the N second terminal devices, the second terminal devices may also determine respective transit capability evaluation values by using the foregoing design. Optionally, it is assumed that a larger first transit capability evaluation value of the first terminal device indicates a stronger transit capability of the first terminal device. When the first transit capability evaluation value is greater than or equal to a preset transit capability threshold, it indicates that the condition is met.

In this design, whether the first terminal device can be used as a transit node of another terminal device may alternatively be evaluated by calculating the transit capability evaluation value of the first terminal device. This may provide a possible transmission path for another terminal device, and achieve an objective of optimizing overall stability and efficiency in a multi-device synchronous playing scenario.

In this design, an optional implementation in which the first terminal device determines the first transit capability evaluation value of the first terminal device based on the first evaluation parameter group is as follows: The first terminal device obtains a transit capability weight factor corresponding to each evaluation parameter included in the first evaluation parameter group. The first terminal device performs weighted summation on all evaluation parameters included in the first evaluation parameter group based on the transit capability weight factor corresponding to each evaluation parameter, to obtain the first transit capability evaluation value. The transit capability weight factor may be predefined, may be obtained based on experience, or the like. Optionally, the first terminal device may alternatively use an implementation of determining the first transit capability evaluation value, for example, a machine learning manner. This is not limited in this application.

In this design, the first terminal device determines the first transit capability evaluation value based on the plurality of evaluation parameters in the first evaluation parameter group, to more accurately evaluate the transit capability of the first terminal device. This can ensure stability, efficiency, and reliability in the multi-device synchronous playing scenario.

In a possible design, the first terminal device may further periodically update the first transit capability evaluation value.

In this design, the first terminal device may obtain a more accurate evaluation result through periodic update, to ensure efficiency, reliability, and stability of multi-device synchronous playing.

In a possible design, role classification may be performed on the first terminal device, and different processing may be performed for different roles. For example, the first terminal device may be classified into a common playing role or an end playing role based on a playing capability evaluation value. The end playing role indicates that a playing capability of the first terminal device is poor. In view of this, the first terminal device determines a first playing capability evaluation value of the first terminal device based on a second evaluation parameter group. The second evaluation parameter group includes one or a combination of the following evaluation parameters: a network signal strength of the first terminal device, a network transmission status of the first terminal device, and a type of the first terminal device. Optionally, if the first terminal device determines that the first playing capability evaluation value does not meet a play capability threshold condition, the first terminal device may select the target transmission path from the N transmission paths corresponding to the N second terminal devices, to obtain the to-be-played audio data. Optionally, it is assumed that a larger first playing capability evaluation value of the first terminal device indicates a stronger playing capability of the first terminal device. When the first playing capability evaluation value is greater than or equal to a preset playing capability threshold, it indicates that the condition is met.

In this design, the playing capability of the first terminal device is evaluated, to trigger the first terminal device in time to optimize the target transmission path, for example, searching for a better target transmission path and perform switching. This can ensure efficiency, reliability, and stability of multi-device synchronous playing.

In a possible design, that the first terminal device selects a target transmission path from N transmission paths based on the transit availability of the N second terminal devices relative to the first terminal device may be implemented as follows: The first terminal device determines that the transit availability of the N second terminal devices relative to the first terminal device does not meet a transit capability threshold condition, and uses a current transmission path as the target transmission path. Alternatively, this may be implemented as follows: the first terminal device determines that transit availability of at least one second terminal device relative to the first terminal device meets a transit capability threshold condition, and selects the target transmission path from at least one transmission path corresponding to the at least one second terminal device. Alternatively, this may be implemented as follows: The first terminal device determines that transit availability of at least one second terminal device relative to the first terminal device meets a transit capability threshold condition, and that compared with transit availability of a second terminal device corresponding to a current transmission path relative to the first terminal device, the transit availability of the at least one second terminal device relative to the first terminal device does not meet a preset switching condition, and uses the current transmission path as the target transmission path.

In this design, the first terminal device may evaluate transit availability of a plurality of transmission paths, to more accurately select a target transmission path. This can ensure efficiency, reliability, and stability of multi-device synchronous playing. In addition, in this design, the transit availability of the plurality of optional transmission paths is compared with the transit availability of the current transmission path. Therefore, it may be specified that switching is performed when the optional transmission path, compared with the current transmission path, meets a preset switching condition (for example, a specific transit availability difference). This can better ensure stability of the transmission path, and avoid frequent switching of the target transmission path.

In a possible design, the first terminal device may further periodically update the first playing capability evaluation value.

In this design, the first terminal device may obtain a more accurate evaluation result through periodic update, to ensure efficiency, reliability, and stability of multi-device synchronous playing.

In a possible design, the first terminal device may further predict a current transmission path to ensure transmission efficiency and stability of the to-be-played audio data. This may be implemented as follows: The first terminal device predicts stability of the current transmission path based on first processing data, to obtain a stability evaluation value of the current transmission path at a first moment. The first processing data is obtained by the first terminal device by collecting statistics on processing data generated by using the current transmission path. The first terminal device predicts a transit capability of the current transmission path based on second processing data, to obtain a transit capability evaluation value of the current transmission path at a second moment. The second processing data is obtained by the first terminal device by collecting statistics on a transit capability evaluation value of a second terminal device corresponding to the current transmission path. If the first terminal device detects a first trigger condition, the first terminal device performs pre-connection on at least one standby transmission path. The first trigger condition includes one or a combination of the following conditions: the stability evaluation value at the first moment meets a preset stability threshold condition, and the transit capability evaluation value at the second moment meets a preset transit capability threshold condition.

In this design, the stability and the transit capability of the current transmission path in a future time period are predicted, to connect to the standby transmission path in advance in a scenario in which stability is poor or a transit capability is poor. This can implement effective switching of the target transmission path, and ensure stability of multi-device synchronous playing.

In a possible design, that the first terminal device selects a target transmission path from N transmission paths includes: The first terminal device selects the target transmission path from the at least one standby transmission path.

In this design, based on the foregoing design, the first terminal device may implement pre-connection of the standby transmission path based on prediction. In this way, when selecting the target transmission path, the first terminal device may determine the target transmission path from the standby transmission path, to improve accuracy and efficiency of transmission path switching.

In a possible design, that the first terminal device predicts stability of the current transmission path based on first processing data may be implemented as follows: The first terminal device predicts the stability of the current transmission path based on the first processing data by using a time-series learning algorithm. That the first terminal device predicts a transit capability of the current transmission path based on second processing data includes: The first terminal device predicts the transit capability of the current transmission path based on the second processing data by using the time-series learning algorithm.

In this design, the time-series learning algorithm may be used to collect statistics on historical processing data, to obtain a more accurate prediction result.

In a possible design, the stability evaluation value is determined by using one or a combination of the following information: a power-off confidence of the second terminal device, a load status of the second terminal device, a network status of the second terminal device, and the like.

In this design, the first terminal device predicts a power-off status, the load status, the network status, or the like of the second terminal device corresponding to the current transmission path, to evaluate the stability of the current transmission path. This can improve efficiency of switching of the target transmission path by the first terminal device, and ensure efficiency and reliability of multi-device synchronous playing.

In a possible design, after obtaining the to-be-played audio data, the first terminal device may receive and respond to a playing instruction, to play the to-be-played audio data. The playing instruction instructs at least one terminal device to synchronously play the to-be-played audio data, and the at least one terminal device includes the first terminal device and the N second terminal devices.

In this design, according to the method provided in this application, after both the first terminal device and another terminal device participating in synchronous playing obtain the to-be-played audio data, synchronous playing may be implemented according to the playing instruction.

According to a second aspect, an embodiment of this application further provides a terminal device, including one or more processors and one or more memories. The one or more memories are configured to store one or more computer programs and data information, the one or more computer programs include instructions, and when the instructions are executed by the one or more processors, the terminal device is enabled to perform the method in any possible design of the first aspect.

According to a third aspect, an embodiment of this application further provides a communication system, including at least one terminal device in the second aspect.

According to a fourth aspect, an embodiment of this application provides a computer-readable storage medium. The computer-readable medium stores a computer program (which may also be referred to as code or instructions). When the computer program is run on a computer, the computer is enabled to perform the method in any possible implementation of the first aspect.

According to a fifth aspect, an embodiment of this application provides a computer program product. The computer program product includes a computer program (which may also be referred to as code or instructions). When the computer program is run, a computer is enabled to perform the method in any possible implementation of the first aspect.

According to a sixth aspect, an embodiment of this application further provides a graphical user interface on a terminal device. The terminal device has a display, one or more memories, and one or more processors. The one or more processors are configured to execute one or more computer programs stored in the one or more memories. The graphical user interface includes a graphical user interface displayed when the terminal device performs the method in any possible design of the first aspect in embodiments of this application.

For beneficial effect of any one of the second aspect to the sixth aspect, refer to beneficial effect of any possible design of the first aspect. Details are not described herein again.

## BRIEF DESCRIPTION OF DRAWINGS

FIG. 1 is an application scenario in a home network;
FIG. 2 is a schematic diagram of a hardware structure of a possible terminal device according to an embodiment of this application;
FIG. 3 is a block diagram of a software structure of a terminal device according to an embodiment of this application;
FIG. 4 is a schematic diagram 1 of an application scenario of a multi-device synchronous playing method according to an embodiment of this application;
FIG. 5 is a schematic flowchart 1 of a multi-device synchronous playing method according to an embodiment of this application;
FIG. 6 is a schematic diagram 2 of an application scenario of a multi-device synchronous playing method according to an embodiment of this application;
FIG. 7 is a schematic flowchart 2 of a multi-device synchronous playing method according to an embodiment of this application;
FIG. 8A and FIG. 8B are a schematic diagram 3 of an application scenario of a multi-device synchronous playing method according to an embodiment of this application;
FIG. 9 is a schematic flowchart 3 of a multi-device synchronous playing method according to an embodiment of this application;
FIG. 10 is a schematic diagram 4 of an application scenario of a multi-device synchronous playing method according to an embodiment of this application; and
FIG. 11 is a schematic diagram of a structure of a terminal device according to an embodiment of this application.

## DESCRIPTION OF EMBODIMENTS

With development of smart network technologies, there are increasingly more multi-device collaborative management scenarios. A device may also be referred to as a "terminal device" or a "terminal", and may be used interchangeably in the following embodiments.

In a collaborative management scenario in which a local area network includes a plurality of terminal devices that may be configured to play an audio, there is an increasingly strong requirement for using a plurality of different terminal devices to perform synchronous audio playing. The local area network may be a home network, an enterprise network, or the like.

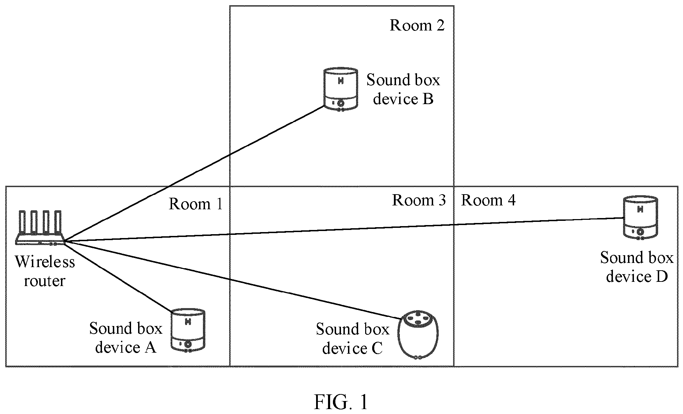

For example, FIG. 1 is an application scenario in the home network. The home network shown in FIG. 1 includes a room 1, a room 2, a room 3, and a room 4, and a terminal device, for example, a sound box device, that may be configured to play an audio is disposed in each room. Each terminal device in the home network may be connected to a local area network configured by an access point (access point, AP) (for example, a wireless router or a switch) located in the room 1, and is configured to implement functions such as data transmission by using the local area network. For example, a user may use a plurality of sound box devices to synchronously play music, so that a user in each room can synchronously hear the same music, or the user does not sense a music delay when going to different rooms. This improves user experience.

For another example, the local area network may alternatively be an enterprise network, and a plurality of broadcast terminal devices may be disposed on/in a plurality of different floors or offices in one enterprise network. The plurality of broadcast terminal devices may synchronously play same audio content.

However, due to factors such as different placement positions and different network signal statuses of different devices, multi-device synchronous audio playing is limited to some extent during implementation. With reference to the scenario shown in FIG. 1, due to factors such as different distances between different sound box devices and the wireless router, placement of the sound box devices in a same room or different rooms, and bandwidth and network signal statuses for receiving audio data by the sound box devices, time spent by different sound box devices in obtaining same audio data may be different, resulting in a problem, for example, poor synchronous playing experience. For example, a network signal status of a sound box device far away from the wireless router is usually poor, and a network signal status of a sound box device in a same room as the wireless router is usually better.

In a multi-device synchronous audio playing scenario, smoothness of synchronous playing is easily affected by an end terminal device based on bucket effect. The end terminal device may be understood as a terminal device whose network signal status is poor to some extent, and is usually a terminal device far away from the wireless router, a terminal device separated by a plurality of obstacles from the wireless router, or the like.

For example, it is assumed that the end terminal device in FIG. 1 is a sound box device D. In a process in which sound box devices A, B, C, and D obtain same to-be-played audio data for synchronous playing, because a network signal status of the sound box device D is poor, and the sound box device D spends longest time in obtaining the audio data, play start time of the sound box devices A, B, C, and D for the to-be-played audio data depends on the time spent by the sound box device D in obtaining the to-be-played audio data. Consequently, a long play start delay exists. In other words, when the sound box devices A, B, and C have obtained the to-be-played audio data but D does not obtain the to-be-played audio data, the sound box devices A, B, and C need to wait for the sound box device D to obtain the to-be-played audio data before starting synchronous playing.

For another example, if the to-be-played audio data is transmitted to the sound box devices A, B, C, and D in a form of data packets or groups, in the synchronous playing process, a next data packet or group of the to-be-played audio data is not completely obtained, and freezing occurs. For example, it is assumed that the to-be-played audio data is a piece of music, and is divided into two data packets for transmission. After obtaining a first data packet of the to-be-played audio data, the sound box devices A, B, C, and D start synchronous playing, and obtain a second data packet of the to-be-played audio data at the same time. It is possible that the first data packet has been played, but any one of the sound box devices A, B, C, and D is not completely obtained the second data packet of the to-be-played audio data. Consequently, playing is paused.

In addition, in the multi-device synchronous audio playing scenario, it may be understood that, as a quantity of end terminal devices participating in synchronous playing increases, synchronous playing may become less smooth.

In view of this, an embodiment of this application provides a multi-device synchronous playing method. In the multi-device synchronous audio playing scenario, factors such as performance and statuses of a plurality of terminal devices included in the scenario are comprehensively considered. Based on an idea that each terminal device may further serve as a transit node between another terminal device and a wireless router, a manner of selecting a target transmission path from a plurality of possible transmission paths for a terminal device in the scenario is used to design a technical solution that can improve playing smoothness, stability, and user experience of multi-device synchronous playing.

The following describes in detail embodiments of this application with reference to accompanying drawings.

It may be understood that audio data (audio data) in embodiments of this application may also be referred to as sound data, represent sound, and may be data obtained after an audio file (for example, an OGG file) is processed. For example, decoding, decompression, sound effect processing, or other processing is performed on the audio file to obtain the audio data. The audio file includes the audio data, and may be an MP3 file, an MP4 file, or a file in another format. This is not limited herein. In other words, the terminal device may implement sound playing based on the audio data.

The terminal device in embodiments of this application may be a device with an audio playing capability, for example, a smart home device (for example, a smart television, a smart screen, and a smart sound box), a mobile phone, a tablet computer, a wearable device (for example, a watch, a helmet, and a headset), an augmented reality (augmented reality, AR)/virtual reality (virtual reality, VR) device, a notebook computer, an ultra-mobile personal computer (ultra-mobile personal computer, UMPC), a netbook, and a personal digital assistant (personal digital assistant, PDA). It may be understood that a specific type of the terminal device is not limited in embodiments of this application.

For example, the terminal device to which embodiments of this application may be applied includes but is not limited to a portable terminal device that carries HarmonyOS®, iOS®, Android®, Microsoft®, or another operating system. Alternatively, the portable terminal device may be another portable terminal device, for example, a laptop (laptop) computer with a touch-sensitive surface (for example, a touch panel).

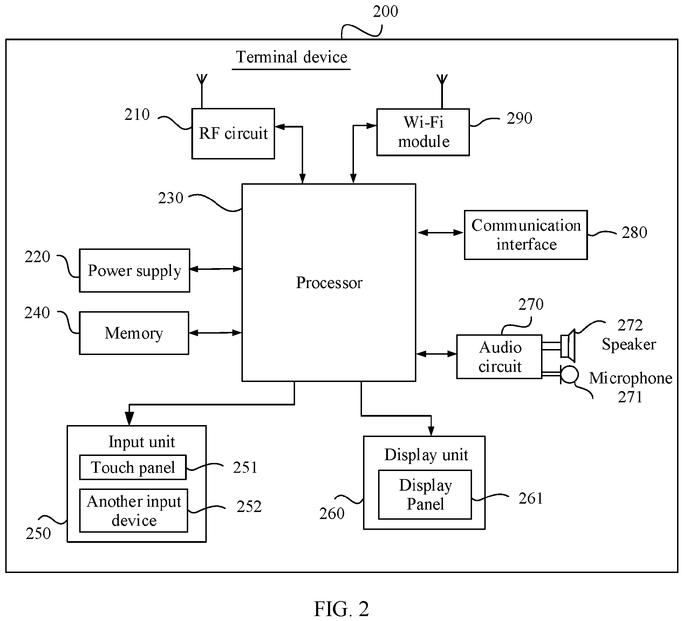

FIG. 2 is a schematic diagram of a possible hardware structure of a terminal device. A terminal device 200 includes components such as a radio frequency (radio frequency, RF) circuit 210, a power supply 220, a processor 230, a memory 240, an input unit 250, a display unit 260, an audio circuit 270, a communication interface 280, and a wireless fidelity (wireless fidelity, Wi-Fi) module 290. A person skilled in the art may understand that a hardware structure of the terminal device 200 shown in FIG. 2 does not constitute a limitation on the terminal device 200. The terminal device 200 in embodiments of this application may include more or fewer components than those shown in the figure, or two or more components may be combined, or different component configuration may be used. The components shown in FIG. 2 may be implemented in hardware including one or more signal processing and/or application-specific integrated circuits, software, or a combination of hardware and software.

The following specifically describes each component of the terminal device 200 with reference to FIG. 2.

The RF circuit 210 may be configured to receive and send data in a communication or call process. Specifically, after receiving downlink data from a base station, the RF circuit 210 sends the downlink data to the processor 230 for processing, and sends to-be-sent uplink data to the base station. Usually, the RF circuit 210 includes but is not limited to an antenna, at least one amplifier, a transceiver, a coupler, a low noise amplifier (low noise amplifier, LNA), a duplexer, and the like.

In addition, the RF circuit 210 may further communicate with another device through wireless communication and a network. The wireless communication may be implemented by using any communication standard or protocol, including but not limited to global system for mobile communication (global system of mobile communication, GSM), general packet radio service (general packet radio service, GPRS), code division multiple access (code division multiple access, CDMA), wideband code division multiple access (wideband code division multiple access, WCDMA), long term evolution (long term evolution, LTE), email, short message service (short message service, SMS), and the like.

A Wi-Fi technology is a short-range wireless transmission technology. The terminal device 200 may be connected to an access point (access point, AP) by using the Wi-Fi module 290, to access a data network. The Wi-Fi module 290 may be configured to receive and send data in a communication process. In embodiments of this application, the terminal device 200 may further be connected to an AP, for example, a wireless router or a gateway, by using the Wi-Fi module 290, to access the data network, for example, receiving to-be-played audio data.

The terminal device 200 may be physically connected to another device by using the communication interface 280. Optionally, the communication interface 280 is connected to a communication interface of the another device by using a cable, to implement data transmission between the terminal device 200 and the another device.

In embodiments of this application, the terminal device 200 can implement a communication service and interact with another terminal device. Therefore, the terminal device 200 needs to have a data transmission function. In other words, a communication module needs to be included inside the terminal device 200. Although FIG. 2 shows communication modules such as the RF circuit 210, the Wi-Fi module 290, and the communication interface 280, it may be understood that the terminal device 200 includes at least one of the foregoing components or another communication module (for example, a Bluetooth module) configured to implement communication, to transmit data.

For example, when the terminal device 200 is a mobile phone, the terminal device 200 may include the RF circuit 210, and may further include the Wi-Fi module 290 or the Bluetooth module (not shown in FIG. 2). When the terminal device 200 is a computer, the terminal device 200 may include the communication interface 280, and may further include the Wi-Fi module 290 or the Bluetooth module (not shown in FIG. 2). When the terminal device 200 is a tablet computer, the terminal device 200 may include the Wi-Fi module or the Bluetooth module (not shown in FIG. 2).

The memory 240 may be configured to store a software program and a module. The processor 230 runs the software program and the module stored on the memory 240, to execute various function applications of the terminal device 200 and process data. Optionally, the memory 240 may mainly include a program storage area and a data storage area. The program storage area may store an operating system (mainly including software programs or modules respectively corresponding to a kernel layer, a system layer, an application program framework layer, an application program layer, and the like).

In addition, the memory 240 may include a high-speed random access memory, and may further include a non-volatile memory, for example, at least one magnetic disk storage device, a flash memory, or another volatile solid-status storage device.

The input unit 250 may be configured to receive edition operations of different types of data objects such as digital or character information entered by a user, and generate a button signal input related to user setting and function control of the terminal device 200. Optionally, the input unit 250 may include a touch panel 251 and another input device 252.

The touch panel 251, which is also referred to as a touchscreen, may collect a touch operation (for example, an operation of a user on the touch panel 251 or near the touch panel 251 by using any suitable object or accessory, for example, a finger or a stylus) of a user on or near the touch panel 251, and drive a corresponding connection apparatus based on a preset program.

Optionally, the another input device 252 may include but is not limited to one or more of a physical keyboard, a function key (for example, a volume control button or a power on/off button), a tracking ball, a mouse, a joystick, and the like.

The display unit 260 may be configured to display information input by the user, information provided for the user, and various menus of the terminal device 200. The display unit 260 is a display system of the terminal device 200, and is configured to present an interface to implement human-computer interaction. The display unit 260 may include a display panel 261. Optionally, the display panel 261 may be configured by using a liquid crystal display (liquid crystal display, LCD), an organic light-emitting diode (organic light-emitting diode, OLED), or the like. In embodiments of this application, the display unit 260 may not be disposed on the terminal device. For example, a display does not need to be disposed on a smart sound box device. Alternatively, the terminal device may use the display unit 260 to display the to-be-played audio data received by the terminal device 200 by using the Wi-Fi module. For example, if the to-be-played audio data is music, lyrics or a picture corresponding to the music may be played on the display panel 261.

The processor 230 is a control center of the terminal device 200, connects to the components through various interfaces and lines, and runs or executes a software program and/or a module stored in the memory 240 and invokes data stored in the memory 240, to perform various functions of the terminal device 200 and process the data, and implement a plurality of services based on the terminal device 200. In embodiments of this application, the processor 230 is configured to implement the method provided in embodiments of this application, to further provide a technical solution that can improve playing smoothness, stability, and user experience of multi-device synchronous playing.

The terminal device 200 further includes the power supply 220 (for example, a battery) configured to supply power to the components. Optionally, the power supply 220 may be logically connected to the processor 230 by using a power management system, to implement functions such as charge management, discharge management, and power consumption management by using the power management system.

As shown in FIG. 2, the terminal device 200 further includes an audio circuit 270, a microphone 271, and a speaker 272, and may provide an audio interface between the user and the terminal device 200. The audio circuit 270 may be configured to convert audio data into a signal that can be identified by the speaker 272, and transmit the signal to the speaker 272. The speaker 272 converts the signal into a sound signal for output. The microphone 271 is configured to collect an external sound signal (for example, sound of a person speaking, or other sound), convert the collected external sound signal into a signal that can be identified by the audio circuit 270, and send the signal to the audio circuit 270. The audio circuit 270 may further be configured to convert the signal sent by the microphone 271 into audio data, and then output the audio data to the RF circuit 220 for sending to, for example, another terminal device, or output the audio data to the memory 240 for subsequent processing.

Although not shown, the terminal device 200 may further include at least one sensor, a camera, and the like. Details are not described herein. The at least one sensor may include but is not limited to a pressure sensor, a barometric pressure sensor, an acceleration sensor, a distance sensor, a fingerprint sensor, a touch sensor, a temperature sensor, and the like.

An operating system (operating system, OS) in embodiments of this application is most basic system software running on the terminal device 200. A smart sound box is used as an example. The operating system may be a HarmonyOS (HarmonyOS) system, an Android (Android) system, or an iOS system. The software system of the terminal device 200 may use a layered architecture, an event-driven architecture, a microkernel architecture, a micro service architecture, or a cloud architecture. In embodiments of this application, an operating system with a layered architecture is used as an example to describe a software structure of the terminal device 200.

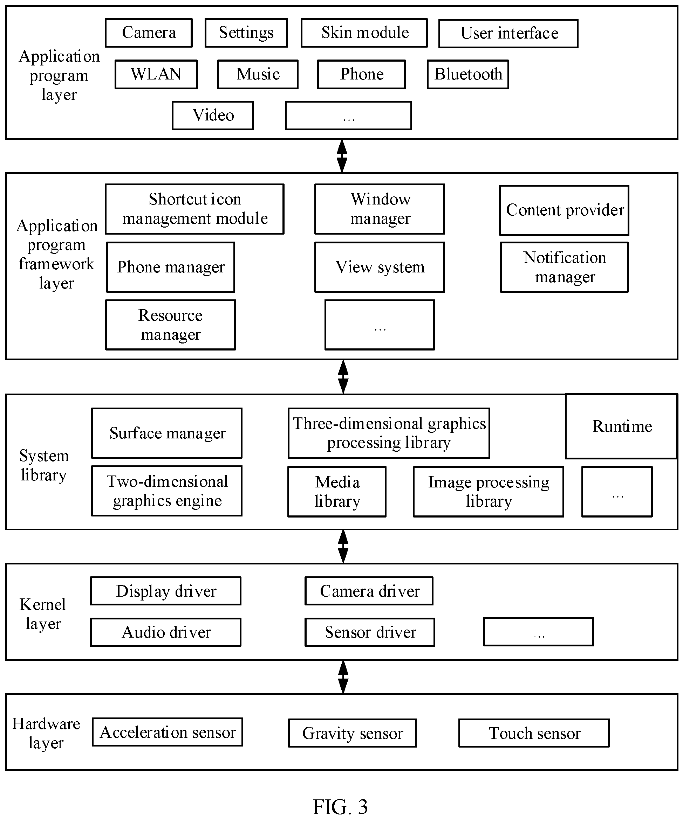

FIG. 3 is a block diagram of a software structure of a terminal device according to an embodiment of this application. As shown in FIG. 3, the software structure of the terminal device may be a layered architecture. For example, software may be divided into several layers, and each layer has a clear role and task. The layers communicate with each other through a software interface. In some embodiments, the operating system is divided into five layers: an application program layer, an application program framework (framework, FWK) layer, runtime and a system library, a kernel layer, and a hardware layer from top to bottom.

The application program layer may include a series of application program packages. As shown in FIG. 3, the application program layer may include Camera, Settings, a skin module, a user interface (user interface, UI), a third-party application program, and the like. The third-party application program may include WLAN, Music, Phone, Bluetooth, Video, and the like.

In some embodiments of this application, the application program layer may be configured to present an edition interface, and the edition interface may be used by the user to perform an operation. For example, if the smart sound box includes the display panel 261, the user may perform a user operation, for example, playing music on a home screen displayed on the display panel 261.

In a possible implementation, the application program may be developed by using a Java language, and is completed by invoking an application programming interface (application programming interface, API) provided by an application program framework layer. A developer may interact with a bottom layer (for example, a hardware layer or a kernel layer) of an operating system by using the application program framework, to develop an application program of the developer. The application program framework layer mainly includes a series of services and management systems of the Android operating system.

The application program framework layer provides an application programming interface and a programming framework for an application program of the application program layer. The application program framework layer includes some predefined functions. As shown in FIG. 3, the application program framework layer may include a shortcut icon management module, a window manager, a content provider, a view system, a phone manager, a resource manager, a notification manager, and the like.

The shortcut icon management module is configured to manage shortcut icons displayed on the terminal device, for example, create a shortcut icon, remove a shortcut icon, and monitor whether a shortcut icon meets a display condition.

The window manager is configured to manage a window program. The window manager may obtain a size of the display, determine whether there is a status bar, perform screen locking, take a screenshot, and the like. The content provider is configured to: store and obtain data, and enable the data to be accessed by an application program. The data may include a video, an image, an audio, calls that are made and answered, a browsing history and bookmarks, an address book, and the like.

The view system includes visual controls such as a control for displaying text and a control for displaying an image. The view system may be configured to construct an application program. A display interface may include one or more views. For example, a display interface including a short message notification icon may include a text display view and an image display view.

The phone manager is configured to provide a communication function of the terminal device, for example, management of a call status (including answering, declining, or the like).

The resource manager provides various resources such as a localized character string, an icon, an image, a layout file, and a video file for an application program.

The notification manager enables an application program to display notification information in a status bar, and may be configured to convey a notification type message. The notification information may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application program that is run on a background, or may be a notification that appears on the screen in a form of a dialog window. For example, text information is displayed in the status bar, a prompt tone is produced, the terminal device vibrates, or an indicator light blinks.

In some embodiments of this application, the application program framework layer is mainly responsible for invoking a service interface communicating with the hardware layer, to transfer an operation request for performing an operation by the user to the hardware layer. The operation request may include an operation request for opening an APP by the user, and the like.

The runtime includes a core library and a virtual machine. The runtime is responsible for scheduling and management of the operating system.

The core library includes two parts: a function that needs to be invoked by a Java language and a core library of the operating system. The application program layer and the application program framework layer run on the virtual machine. The virtual machine executes Java files of the application program layer and the application program framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

In some embodiments, the three-dimensional graphics processing library may be configured to draw a three-dimensional moving track image, and the 2D graphics engine may be configured to draw a two-dimensional moving track image.

The kernel layer is a layer between hardware and software. The kernel layer includes at least a display driver, a camera driver, an audio driver, and a sensor driver.

The hardware layer may include various types of sensors, for example, an acceleration sensor, a gyroscope sensor, and a touch sensor.

Usually, a plurality of application programs may run simultaneously on the terminal device 200. Simply, one application program may correspond to one process. Complexly, one application program may correspond to a plurality of processes. Each process has a process number (process ID).

With reference to the descriptions of the hardware structure of the terminal device in FIG. 2 and the descriptions of the software framework of the terminal device in FIG. 3, the following describes, with reference to a plurality of embodiments and accompanying drawings, software and hardware working principles for performing, by a terminal device, a multi-device synchronous playing method provided in embodiments of this application.

It should be understood that, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following" or a similar expression indicates any combination of these items, including any combination of single items or a plurality of items. For example, at least one of a, b, or c may indicate a, b, c, a and b, a and c, b and c, or a, b, and c, where a, b, and c may be singular or plural.

"A plurality of" in embodiments of this application indicates two or more.

In addition, it should be understood that in descriptions of this application, terms such as "first" and "second" are merely used for differentiation and description, but should not be understood as an indication or implication of relative importance or an indication or implication of a sequence.

In addition, in embodiments of this application, a "terminal device", a "device", a "mobile phone", and the like may be interchangeably used, that is, may be various devices configured to implement embodiments of this application. An "application" and an "application program" in embodiments of this application may also be interchangeably used, that is, may be programs or clients with a specific service providing capability. In other words, an application and a client may also be interchangeably used, for example, a video client or a game client may also be referred to as a video application or a game application.

It should be understood that the hardware structure of the terminal device may be shown in FIG. 2, and the software architecture may be shown in FIG. 3. A software program and/or a module corresponding to the software architecture of the terminal device may be stored in the memory 240. The processor 230 may run the software program and the application stored in the memory 240 to perform a procedure of the multi-device synchronous playing method provided in embodiments of this application.

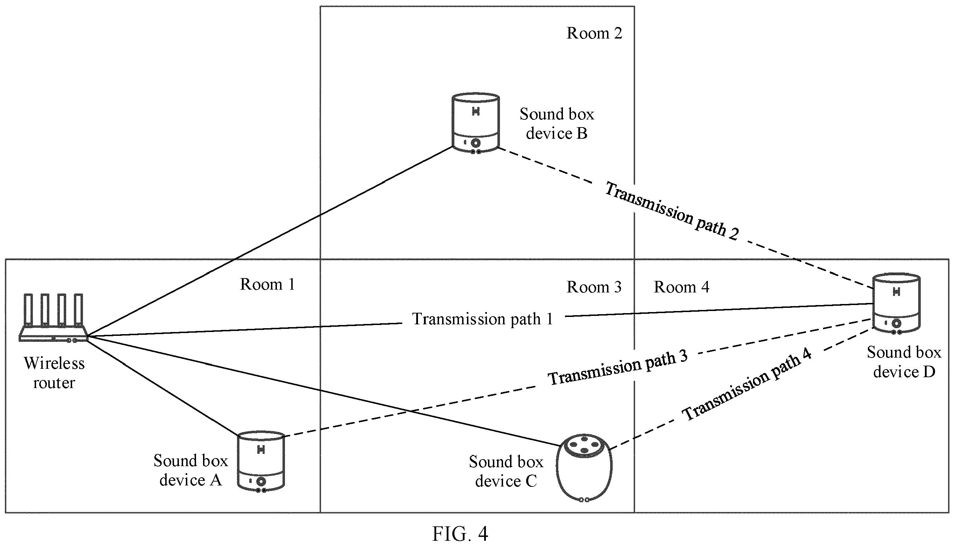

To facilitate understanding of the multi-device synchronous playing method provided in this application, the following describes, with reference to content shown in FIG. 4 to FIG. 10, an implementation process of the method provided in this application.

Embodiments of this application are applicable to an application scenario of multi-device synchronous audio playing. Usually, a plurality of terminal devices are connected to a same local area network, for example, the scenario shown in FIG. 1. It should be noted that the application scenario of multi-device synchronous audio playing in FIG. 1 is merely an example for description. A quantity of wireless APs, a quantity of terminal devices, a type of a wireless AP, and a type of a terminal device that are included in the application scenario of multi-device synchronous audio playing are not limited in embodiments of this application.

In the application scenario, in a process of obtaining to-be-played audio data, the terminal device may obtain the to-be-played audio data by using a wireless router, or may obtain the to-be-played audio data in a manner in which another terminal device transits the to-be-played audio data. For example, FIG. 4 is a schematic diagram of an application scenario of another multi-device synchronous playing method according to an embodiment of this application. The sound box device D is used as an example.

In an optional obtaining manner, the sound box device D may obtain, based on that the sound box device D is connected to the wireless router by using the Wi-Fi module 290, the to-be-played audio data by using the wireless router, for example, a transmission path 1 (wireless router -> sound box device D) in FIG. 4.

In another optional obtaining manner, due to factors such as a long distance or a large quantity of obstacles between the sound box device D and the wireless router, a status of a network signal connected between the sound box device D and the wireless router is poor. Therefore, in the multi-device synchronous audio playing scenario, the sound box device D may further obtain, based on that the sound boxes A, B, and C also obtain the same to-be-played audio data, the to-be-played audio data through transit of the sound box device A, B, or C, for example, a transmission path 2 (wireless router -> sound box device B → sound box device D), a transmission path 3 (wireless router → sound box device A → sound box device D), or a transmission path 4 (wireless router → sound box device C → sound box device D) in FIG. 4. The sound box device A, B, or C may obtain the to-be-played audio data by using the wireless router. It should be noted that the to-be-played audio data may be transmitted between terminal devices in transmission manners such as a wireless or wired router, Bluetooth, and Wi-Fi direct connection. This is not limited in this application.

It may be understood that the terminal device not only has a playing capability, but may have a transit capability. The playing capability indicates efficiency of obtaining the to-be-played audio data and playing the to-be-played audio data by the terminal device, for example, time spent in obtaining the to-be-played audio data, and may reflect processing capabilities such as continuously and stably obtaining the to-be-played audio data by the terminal device, and management and buffering of the to-be-played audio data. The transit capability indicates efficiency, performance, continuity, reliability, and the like of obtaining the to-be-played audio data and transmitting the to-be-played audio data to another terminal device by the terminal device, for example, total time spent by the terminal device from obtaining the to-be-played audio data to transmitting the to-be-played audio data to the another terminal device, stability of a running status of the terminal device, and continuous stability in a process of transiting the to-be-played audio data by the terminal device.

Based on descriptions about the scenario in FIG. 4, in the multi-device synchronous audio playing scenario, each terminal device may select one transmission path from a plurality of transmission paths to obtain to-be-played audio data. In view of this, to improve smoothness, stability, user experience, and the like of synchronous audio playing in the scenario, during implementation of this application, a technical solution of how to select a target transmission path for each terminal device in the scenario may be provided with reference to transit capabilities and playing capabilities of the plurality of terminal devices. This optimizes a transmission path for obtaining to-be-played audio data by at least one terminal device, improves efficiency, reliability, and the like of obtaining the to-be-played audio data by the plurality of terminal devices, reduces time spent by an end terminal device in obtaining the to-be-played audio data, and improves stability of obtaining the to-be-played audio data.

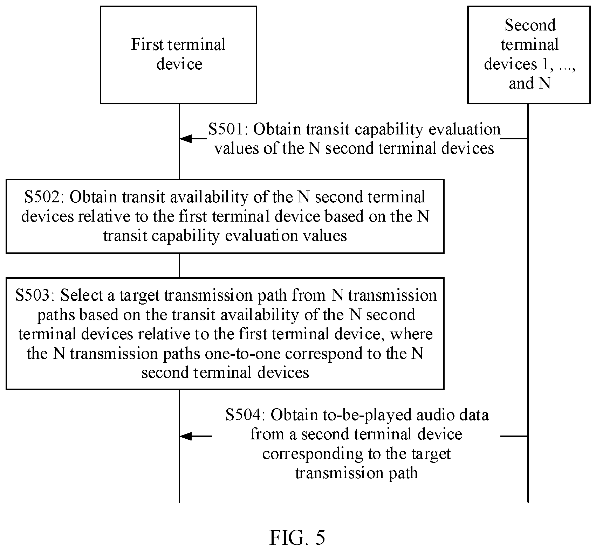

In an optional embodiment, FIG. 5 is a schematic flowchart of a multi-device synchronous playing method according to an embodiment of this application. It is assumed that there are a plurality of terminal devices in a synchronous audio playing scenario. In the following embodiments, one of the terminal devices (namely, a first terminal device in the following embodiments) is used as an example to describe the method provided in embodiments of this application. It may be understood that for an implementation of another terminal device (namely, any terminal device in N second terminal devices in the following embodiments), refer to an implementation of the first terminal device.

The first terminal device may receive a plurality of possible trigger events, and the trigger event indicates the first terminal device to perform a method procedure shown in FIG. 5.

In a possible trigger scenario, the first terminal device receives a multi-device synchronous playing event. In view of this, if the first terminal device does not store a corresponding default transmission path for obtaining to-be-played audio data, the first terminal device may select a target transmission path by using the method procedure shown in FIG. 5. It should be noted that the first terminal device may usually use a transmission path (for example, the transmission path 1 in FIG. 4) corresponding to a wireless router as a default transmission path, or the first terminal device saves, as a default transmission path, a target transmission path determined during previous multi-device synchronous playing.

In another possible trigger scenario, the first terminal device may perform triggering based on network parameters such as a network signal strength (for example, actual available bandwidth) of the first terminal device and a network transmission status. When detecting that a network parameter of the first terminal device cannot meet a basic requirement for obtaining the to-be-played audio data, the first terminal device may trigger selection of the target transmission path. If the target transmission path is different from a current transmission path, the first terminal device may switch to the target transmission path to obtain the to-be-played audio data, to improve obtaining efficiency, stability, and reliability. For example, the basic requirement for obtaining the to-be-played audio data by the first terminal device may be preset. For example, a downlink transmission rate is set to 100 Kbps based on the requirement.

In still another possible trigger scenario, the first terminal device may set a trigger period for determining the target transmission path. In this way, the target transmission path of the first terminal device is periodically obtained, to reduce bucket effect caused by exception of the first terminal device during usage, and improve audio obtaining stability.

It should be noted that, in the multi-device synchronous playing scenario, the first terminal device may further be configured to perform, based on another possible trigger scenario, the method procedure for obtaining the target transmission path shown in FIG. 5. This is not limited in this application.

S501: A first terminal device obtains transit capability evaluation values of N second terminal devices, where N is a positive integer. The transit capability evaluation value indicates a transit capability of the second terminal device. When the second terminal device meets a preset transit capability threshold condition, the second terminal device may send the transit capability evaluation value, so that the first terminal device may obtain the transit capability evaluation value. In a possible application scenario, a larger transit capability evaluation value of the second terminal device indicates a stronger transit capability of the second terminal device, and a smaller transit capability evaluation value of the second terminal device indicates a weaker transit capability of the second terminal device. In other words, when the transit capability evaluation value of the second terminal device is greater than a preset transit capability threshold, it may indicate that the transit capability threshold condition is met. For example, longer time spent by the first terminal device in obtaining to-be-played audio data through transit by using the second terminal device indicates greater impact causing bucket effect of multi-device synchronous audio playing, and indicates a weaker transit capability of the second terminal device. Alternatively, for another example, poorer stability (for example, a large fluctuation range, a large fluctuation frequency, or a low smoothing degree of a transmission rate) of obtaining the to-be-played audio data by the first terminal device through transit by using the second terminal device indicates greater impact causing bucket effect of multi-device synchronous audio playing, and indicates a weaker transit capability of the second terminal device. In this case, after obtaining transit capability evaluation values of one or more second terminal devices, the first terminal device may select an appropriate target second terminal device from the N second terminal devices to obtain the to-be-played audio data.

In an optional example, embodiments of this application provide an implementation of determining the transit capability evaluation value of the second terminal device. Any second terminal device is used as an example, and an implementation of another second terminal device is similar. This may be implemented as follows: The second terminal device determines the transit capability evaluation value based on a first evaluation parameter group. For example, the first evaluation parameter group may include but is not limited to the following parameters: a network signal strength of the second terminal device, a network transmission status of the first terminal device, a type of the second terminal device, a usage status of the second terminal device, and an energized frequency of the second terminal device. It should be noted that "first" and "second" are merely used for distinguishing description. It may be understood that when a transit capability evaluation value of the first terminal device is determined, an evaluation parameter group corresponding to the first terminal device is used.

(1) The network signal strength may be represented, for example, by a received signal strength indication (received signal strength indication, RSSI), may indicate actual available transmission bandwidth of the terminal device, and affect a network transmission rate of the terminal device. Usually, the network signal strength may be determined based on factors such as interference of a channel on which a signal works, a transmission distance, a placement position of a router, an antenna gain, a transmit power of the router, and a room pattern. A larger value of the RSSI indicates a stronger signal strength and better data loading smoothness when a user uses the second terminal device, and a smaller value of the RSSI indicates a weaker signal strength and poorer data loading smoothness when the user uses the second terminal device, and problems such as freezing and a loading failure may even occur. It may be understood that a stronger network signal strength of the second terminal device indicates a stronger transit capability, and a weaker network signal strength of the second terminal device indicates a weaker transit capability.

(2) The network transmission status may be represented by parameters such as transmission bandwidth, a transmission delay, and delay jitter. If the terminal device has a higher data throughput, larger transmission bandwidth, a lower transmission delay, and/or smaller delay jitter, it indicates that the terminal device has a better network transmission status. The network transmission status may usually be determined by a router connected to the terminal device. For example, a larger quantity of terminal devices connected to the router connected to the terminal device indicates smaller transmission bandwidth allocated to each terminal device. It may be understood that a better network transmission status of the second terminal device indicates a stronger transit capability, and a poorer network transmission status of the second terminal device indicates a weaker transit capability.

(3) The type of the terminal device may be determined based on factors such as models and specifications of hardware modules such as a processor and a network interface card of the terminal device, and may be used to evaluate performance of the terminal device, for example, processing performance or power consumption performance. During implementation, different sub-evaluation values may be determined for different types of terminal devices. A determining manner may be predefined, obtained based on an empirical value, or determined by comprehensively considering a plurality of hardware modules included in the terminal device. A specific implementation of determining a sub-evaluation value for the second terminal device based on the type of the terminal device is not limited in this application. It may be understood that better performance of the type of the second terminal device indicates a stronger transit capability, and poorer performance of the type of the second terminal device indicates a weaker transit capability.

(4) The usage status of the terminal device may be determined based on a load status of the terminal device, for example, load of a CPU and load of a network interface card. Because processing performance of the terminal device is specific, a new processing task running on the second terminal device is affected by a current load status of the second terminal device. Larger load of the second terminal device indicates a weaker processing capability of the second terminal device for the new processing task. It may be understood that less load of the second terminal device indicates a stronger transit capability, and larger load of the second terminal device indicates a weaker transit capability.

(5) The energized frequency of the terminal device may indicate a probability that the terminal device is in an on state, and may be obtained by collecting statistics on and predicting whether the terminal device is energized in a historical time period. For example, the sound box device B in the room 2 in FIG. 4 is used as an example. It is assumed that the room 2 is a living room. Statistics about whether the sound box device B is energized (on) in a historical time period are collected, and it is determined that a probability that the sound box device B is turned off after 10 p.m. gradually increases. It may be understood that, if the second terminal device is in a deenergized state, the second terminal device cannot transit the to-be-played audio data for the first terminal device. In this case, a low transit capability evaluation value of the second terminal device may be set, to avoid a problem that the first terminal device fails to obtain the to-be-played audio data after the second terminal device is powered off (turned off).

Optionally, the second terminal device determines, based on the first evaluation parameter group, that the transit capability evaluation value may meet a requirement of the following formula 1:

$$Transability_k = \theta_1 * \alpha_1 + \theta_2 * \alpha_2 + \cdots + \theta_n * \alpha_n = \sum_1^n(\theta_i * \alpha_i) \text{ Formula 1}$$

$Transability_k$ indicates a transit capability evaluation value of a $k^{th}$ (k is a positive integer less than or equal to N) second terminal device, $\theta_i$ indicates a transit capability weight factor allocated to an $i^{th}$ (i is a positive integer from 1 to n) evaluation parameter, $\alpha_i$ indicates a sub-evaluation value of the $i^{th}$ evaluation parameter in the first evaluation parameter group, and n indicates a quantity of evaluation parameters included in the first evaluation parameter group. For example, if the first evaluation parameter group includes the network signal strength, the network transmission status, the type of the terminal device, the usage status of the terminal device, and the energized frequency of the terminal device that are described in the foregoing content, a value of n is 5. It should be noted that a transit capability weight factor allocated to each evaluation parameter may be obtained based on historical experience, or may be customized; and may be adjusted in time.

In a possible implementation, the second terminal device may publish a transit service in a service availability registration and discovery manner, or may publish the transit capability evaluation value in a broadcast or multicast packet manner, so that the first terminal device can obtain the transit capability evaluation value of the second terminal device, and the to-be-played audio data is transited by using the second terminal device. For example, the sound box devices A, B, and C included in FIG. 4 broadcast $Transability_k$ in a local area network established based on the wireless router, so that the sound box device D serving as an end terminal device may receive $Transability_A$, $Transability_B$, and $Transability_C$. Therefore, the sound box device B has the transmission paths 1, 2, 3, and 4 shown in FIG. 4.

Based on the foregoing examples, in the application scenario of multi-device synchronous audio playing, in this embodiment of this application, a transit capability of a terminal device included in the application scenario is evaluated, and the transit capability is used to determine whether the terminal device can be used as a transit node for another terminal device to obtain to-be-played audio data. This provides a plurality of optional transmission paths for another terminal device, and implements path optimization. In comparison with the conventional technology in which each terminal device obtains, from a router, a transmission manner of to-be-played audio data, in this embodiment of this application, efficiency, stability, reliability, and the like of obtaining same to-be-played audio data by a plurality of terminal devices can be improved, to improve user experience of multi-device synchronous playing.

In addition, during implementation of this application, the first terminal device may also determine a transit capability evaluation value of the first terminal device, to evaluate whether the first terminal device has a capability of forwarding the to-be-played audio data to another terminal device. Optionally, if the first terminal device determines that the transit capability evaluation value of the first terminal device is greater than a transit capability threshold (the transit capability threshold may indicate a threshold of a capability of the first terminal device to forward the to-be-played audio data for another terminal device), the first terminal device may publish a transit service. It may also be understood that the first terminal device may be found by and connected to another terminal device through searching, to perform data transmission. In other words, in S501, the first terminal device may obtain the transit capability evaluation value of the second terminal device. It indicates that the second terminal device has a transit capability, that is, the second terminal device publishes the transit service.

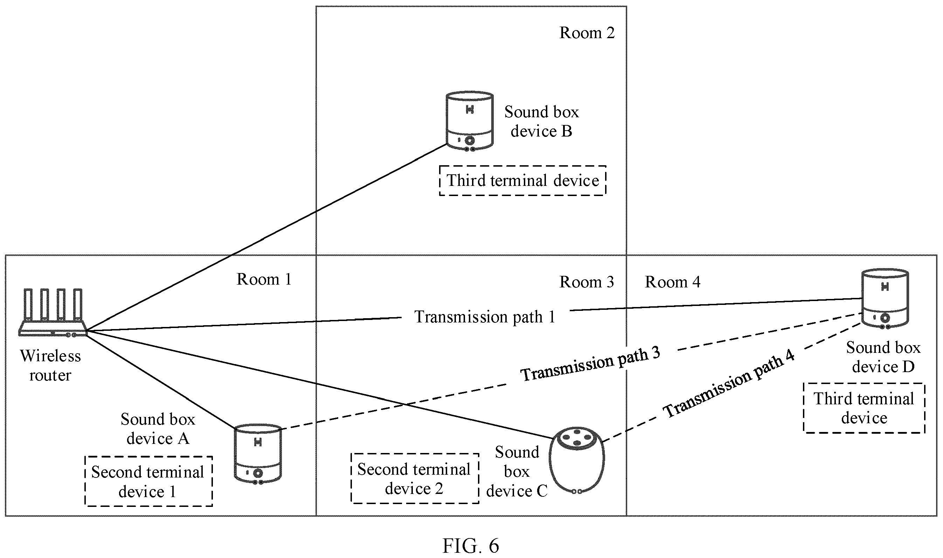

It should be noted that, in a local area network in which the first terminal device and the N second terminal devices are located, a third terminal device that does not have a transit capability or whose transit capability does not meet a preset transit capability threshold requirement but has a playing capability may further exist. The third terminal device is configured to: after obtaining the to-be-played audio data, implement synchronous playing of the to-be-played audio data together with the first terminal device and the N second terminal devices. For example, FIG. 6 is a schematic diagram of still another application scenario of the multi-device synchronous playing method according to an embodiment of this application. In a local area network shown in FIG. 6, the sound box device D is used as a first terminal device. The sound box device A and the sound box device C publish transit services, and may be used as second terminal devices (a wireless router is used as an AP, may transmit to-be-played audio data to the sound box device D, and therefore may be understood as a second terminal device). The sound box device B does not publish a transit service but has a playing capability, and may be used as a third terminal device.

In a possible implementation, the first terminal device, the second terminal device, or the third terminal device may publish transit services at different moments and at different locations, or may not publish a transit service. For example, at a moment T1, the first terminal device may periodically publish the transit capability evaluation value in the service availability registration and discovery manner or the broadcast or multicast packet manner. At a moment T2, after detecting that the transit capability evaluation value is no longer greater than the transit capability threshold, the first terminal device no longer publishes the transit capability evaluation value in the service availability registration and discovery manner or the broadcast or multicast manner.

S502: The first terminal device obtains transit availability of the N second terminal devices relative to the first terminal device based on the N transit capability evaluation values.

The first terminal device obtains the transit capability evaluation values of the one or more second terminal devices in S501, and may obtain a strength of a transit capability of each second terminal device. Because the first terminal device is affected by factors such as a relative distance between the first terminal device and any second terminal device, placement positions, and whether the first terminal device is located in a same room as the second terminal device, efficiency of obtaining the to-be-played audio data by the first terminal device further depends on a relative signal strength between the first terminal device and the second terminal device. The relative signal strength of the second terminal device may be represented as a signal strength, detected by the first terminal device, of the second terminal device. For example, a larger relative signal strength of the second terminal device indicates smaller relative signal attenuation between the first terminal device and the second terminal device, and a smaller relative signal strength of the second terminal device indicates larger relative signal attenuation. In other words, the transit availability of the second terminal device relative to the first terminal device may be determined based on the transit capability evaluation value of the second terminal device and the relative signal strength between the first terminal device and the second terminal device.

In view of this, in an optional example, the first terminal device may separately allocate different transit availability weight factors to the second terminal devices based on a relative signal strength between the first terminal device and each second terminal device. The first terminal device may allocate a larger transit availability weight factor to the second terminal device with a larger relative signal strength. In another optional example, the first terminal device may further prestore a transit availability weight factor allocated to each second terminal device.

Then, the first terminal device determines the transit availability of each second terminal device based on the transit availability weight factor and the transit capability evaluation value of each second terminal device. Optionally, the first terminal device determines that transit availability of a $k^{th}$ second terminal device relative to the first terminal device may meet a requirement of the following formula 2:

$$Score_{X \leftarrow k} = \gamma_{X \leftarrow k} * Transability_k \quad \text{Formula 2}$$

$Score_{X \leftarrow k}$ indicates the transit availability of the $k^{th}$ (k is a positive integer) second terminal device relative to the first terminal device (X may indicate an identifier of the first terminal device), and $\gamma_{X \leftarrow k}$ indicates a transit availability weight factor allocated by the first terminal device to the $k^{th}$ second terminal device.

For example, with reference to the application scenario diagram shown in FIG. 4, an example in which the sound box device D is used as a first terminal device, and the sound box device A, the sound box device B, the sound box device C, and the wireless router are used as second terminal devices is used. The sound box device D may obtain transit capability evaluation values of the sound box device A, the sound box device B, the sound box device C, and the wireless router, and determine a transit availability weight factor of each second terminal device relative to the sound box device D based on a relative signal strength between the sound box device D and each second terminal device. Finally, transit availability of each second terminal device relative to the first terminal device is obtained based on the transit availability weight factor and the transit capability evaluation value of each second terminal device. For ease of understanding, the following uses Table 1 for description.

**Table 1**

| Name of a second terminal device | Transit capability evaluation value | Transit availability weight factor allocated by a sound box device D | Transit availability relative to the sound box device D |
|---|---|---|---|
| Wireless router | $Transability_{AP}$ | $YD<-AP$ | $Score_{D \leftarrow AP}$ |
| Sound box device A | $Transability_A$ | $\gamma_{D \leftarrow A}$ | $Score_{D \leftarrow A}$ |
| Sound box device B | $Transability_B$ | $\gamma_{D \leftarrow B}$ | $Score_{D \leftarrow B}$ |
| Sound box device C | $Transability_C$ | $\gamma_{D \leftarrow C}$ | $Score_{D \leftarrow C}$ |

In Table 1, the transit availability of each second terminal device obtained by the sound box device D is determined based on the transit capability evaluation value and the transit availability weight factor. For example, the transit capability evaluation value of the wireless router is usually greater than the transit capability evaluation value of the sound box device A, the sound box device B, or the sound box device C. However, because the relative signal strength between the wireless router and the sound box device D is large (for example, due to a long distance and a factor that two walls need to be penetrated), $\gamma_{D \leftarrow AP}$ allocated by the sound box device D to the wireless router is small. However, the relative signal strength between the sound box device C and the sound box device D is small, $\gamma_{D \leftarrow C}$ allocated by the sound box device D to the sound box device C is large, and $Score_{D \leftarrow C}$ may be greater than $Score_{D \leftarrow AP}$. In this way, although the transit capability evaluation value of the wireless router is large, time spent by the sound box device D in obtaining the to-be-played audio data by using the transmission path 1 may be longer than time spent in obtaining the to-be-played audio data by using the transmission path 4. Therefore, the sound box device D may select a better transmission path based on the transit availability of each second terminal device.

S503: The first terminal device selects a target transmission path from N transmission paths based on the transit availability of the N second terminal devices relative to the first terminal device. The N transmission paths one-to-one correspond to the N second terminal devices. For example, in FIG. 4, the sound box device D corresponds to a transmission path 1 (wireless router → sound box device D), a transmission path 2 (wireless router → sound box device B → sound box device D), a transmission path 3 (wireless router → sound box device A → sound box device D), or a transmission path 4 (wireless router → sound box device C → sound box device D).

For example, as described in S502, after obtaining the transit availability of each second terminal device, the first terminal device may select a transmission path corresponding to a second terminal device with highest transit availability as the target transmission path. For example, for the sound box device D shown in FIG. 4, it is assumed that $Score_{D \leftarrow C} > Score_{D \leftarrow B} > Score_{D \leftarrow A} > Score_{\leftarrow AP}$. The sound box device D may select the transmission path 4 corresponding to the sound box device C as the target transmission path.

Alternatively, one transmission path may be randomly selected as the target transmission path from the N transmission paths corresponding to the N second terminal devices whose transit availability meets the preset transit capability threshold condition. The preset transit capability threshold condition may be that transit availability is greater than or equal to a preset transit threshold.

Alternatively, to ensure stability of the multi-device synchronous audio playing scenario, if the first terminal device already has a transmission path, when it is determined, based on the transit availability, that the current transmission path meets the preset transit capability threshold condition, even if a better transmission path exists, switching is not required. In other words, when the current transmission path cannot meet the preset transit capability threshold condition, selection may be performed from other transmission paths that meet the preset transit capability threshold condition. For example, if a current transmission path of the sound box device D shown in FIG. 4 is the transmission path 1 corresponding to the wireless router, and the transmission path 1 meets the preset transit capability threshold condition, even if the transit availability of the sound box device A, B, or C relative to the sound box device D is greater than the availability of the wireless router relative to the sound box device D, the target transmission path does not need to be switched.

Alternatively, when the first terminal device determines that transit availability of at least one second terminal device relative to the first terminal device meets a transit capability threshold condition, and that compared with transit availability of a second terminal device corresponding to a current transmission path relative to the first terminal device, the transit availability of the at least one second terminal device relative to the first terminal device does not meet a preset switching condition, the first terminal device may maintain the current transmission path. For example, the current transmission path of the sound box device D shown in FIG. 4 is the transmission path 1, and the transmission path 2 meets the transit capability threshold condition but has a small gain compared with the transmission path 1, so that the transmission path may not be switched. This can ensure stability of the multi-device synchronous audio playing scenario.

It should be noted that, after the first terminal device selects the target transmission path, if the target transmission path has a corresponding physical transmission channel, the corresponding physical transmission channel is used to implement data transmission. For example, if the second terminal device is a wireless router, a physical transmission channel, for example, a physical transmission channel based on a wireless local area network, exists between the second terminal device and the first terminal device. If the target transmission path does not have a corresponding physical transmission channel, the first terminal device may initiate a request for establishing a physical transmission channel to a target second terminal device corresponding to the target transmission path. In this way, after the physical transmission channel is established between the first terminal device and the target second terminal device, the to-be-played audio data may be obtained based on the target second terminal device, and the first terminal device may receive, through the physical transmission channel, the to-be-played audio data transmitted by the target second terminal device.

In a possible implementation, in the application scenario of multi-device synchronous playing, as at least one terminal device changes a different position, the first terminal device may trigger switching of different target transmission paths (for example, the first terminal device changes a position, or the second terminal device corresponding to the current transmission path of the first terminal device changes a position), source addresses included in data packets that are received by the first terminal device and that include the to-be-played audio data may be different. For example, when the target transmission path of the first terminal device is the transmission path 1, a source address included in the data packet including the to-be-played audio data is a MAC address of the wireless router. When the target transmission path of the first terminal device is the transmission path 2, a source address included in the data packet including the to-be-played audio data is a MAC address of the sound box device B.

In addition, to ensure actual availability of the target transmission path, before an actual physical transmission path is established, a transmission rate, stability, reliability, and the like of the target transmission path may further be simulated through a test transmission channel corresponding to pre-connection. If a test result meets a requirement, the actual physical transmission path is established. This can ensure efficiency and reliability of data transmission, and ensure playing efficiency of the application scenario of multi-device synchronous playing.

S504: The first terminal device obtains the to-be-played audio data from the second terminal device corresponding to the target transmission path.

During implementation, after determining the target transmission path, the first terminal device may send a request message to the target second terminal device corresponding to the target transmission path. The request message is used to request the target second terminal device to transmit, after obtaining the to-be-played audio data, the to-be-played audio data to the first terminal device. It may be understood that the target second terminal device may further buffer the to-be-played audio data, to implement multi-device synchronous audio playing together with the first terminal device.

In the implementation process described in FIG. 5, for one or more terminal devices participating in the application scenario of multi-device synchronous audio playing, based on a design idea that the terminal device may further serve as a transit node, relative signal strengths between each terminal device and a plurality of other terminal devices in the application scenario are analyzed, so that the terminal device may have a plurality of options of transmission paths. In addition, each terminal device may select, by analyzing transit availability, an appropriate transmission path to obtain the to-be-played audio data. In comparison with an application scenario of multi-device synchronous audio playing in the conventional technology in which each terminal device needs to obtain to-be-played audio data from a wireless router, efficiency, smoothness, stability, user experience, and the like of multi-device synchronous audio playing can be improved.

In another optional embodiment, according to the multi-device synchronous playing method provided in embodiments of this application, the target transmission path determined for each terminal device in the application scenario of multi-device synchronous audio playing can further be dynamically analyzed. The plurality of terminal devices included in the application scenario are periodically analyzed, to dynamically adjust the target transmission path of the terminal device in a timely and accurate manner. This can ensure stability of the application scenario of multi-device synchronous audio playing, improve playing smoothness, and enhance user experience.

Based on the foregoing implementation of selecting the target transmission path for each terminal device in the application scenario of multi-device synchronous audio playing based on the transit capability of the terminal device, during implementation of this application, the playing capability of each terminal device may further be evaluated. The transit capability and the playing capability of each terminal device are evaluated, to optimize the target transmission path of the terminal device and ensure stability in the application scenario.

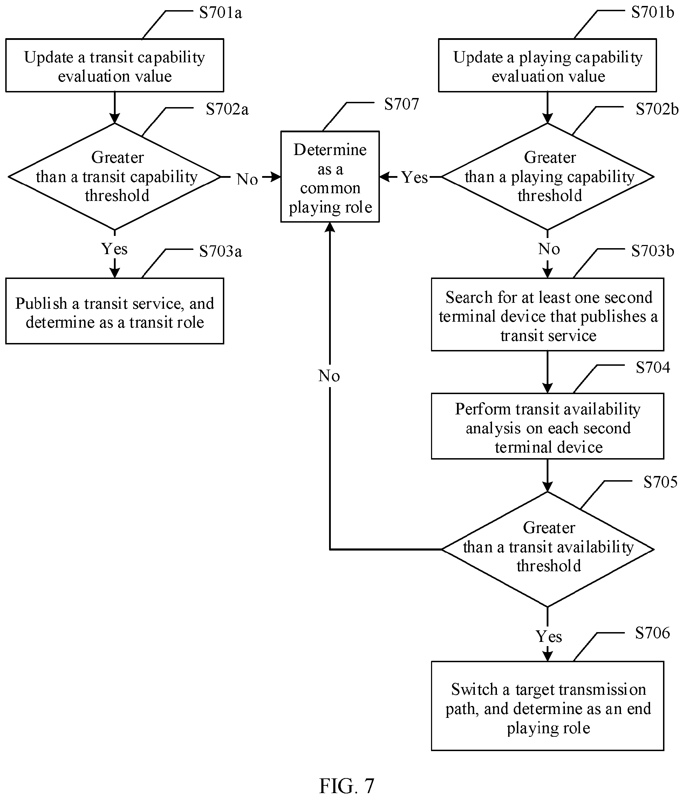

In an optional implementation, FIG. 7 is still another schematic flowchart of a multi-device synchronous playing method. In this implementation, a first terminal device is used as an example, and role classification is performed on the first terminal device based on a transit capability and a playing capability of the first terminal device and transit availability of N second terminal devices relative to the first terminal device. In this way, a role of the first terminal device is determined, and different processing may be performed on the first terminal device with reference to features of different roles, to ensure that each terminal device included in an application scenario of multi-device synchronous audio playing has better efficiency of obtaining to-be-played audio data. This can ensure stability, smoothness, and the like of audio playing in the application scenario.

For a manner of evaluating the transit capability of the first terminal device and the transit availability of the N second terminal devices relative to the first terminal device, refer to the content of the embodiments described in FIG. 4 to FIG. 6. Details are not described herein again. Based on a similar evaluation idea, the playing capability of the first terminal device may be implemented based on a playing capability evaluation value. The playing capability evaluation value may indicate the playing capability of the first terminal device. It may be understood that a larger playing capability evaluation value of the first terminal device may indicate a stronger playing capability of the first terminal device. In other words, when the first terminal device spends shorter time in obtaining the to-be-played audio data with higher stability, higher reliability, and the like, impact causing bucket effect of multi-device synchronous audio playing is smaller.

Optionally, an implementation of determining the playing capability evaluation value of the first terminal device provided in embodiments of this application may be implemented as follows: The first terminal device determines a playing capability evaluation value of each second terminal device based on a second evaluation parameter group. For example, the second evaluation parameter group may include but is not limited to the following parameters: a network signal strength, a network transmission status, and a type of the terminal device. For a definition of the evaluation parameter included in the second evaluation parameter group, refer to the foregoing content described with reference to FIG. 5. Details are not described herein again in this application.

The first terminal device determines, based on the second evaluation parameter group, that the playing capability evaluation value may meet a requirement of the following formula 3:

$$Playbackability_X = \varphi_1 * \beta_1 + \varphi_2 * \beta_2 + \cdots + \varphi_m * \beta_m = \sum_1^m (\varphi_j * \beta_i) \quad \text{Formula 3}$$

$Playbackability_X$ indicates the playing capability evaluation value of the first terminal device ($X$ may indicate an identifier of the first terminal device), $\varphi_j$ indicates a playing capability weight factor allocated to a $j^{th}$ (j is a positive integer from 1 to m) evaluation parameter, $\beta_i$ indicates a sub-evaluation value of the $j^{th}$ evaluation parameter in the second evaluation parameter group, and m indicates a quantity of evaluation parameters included in the second evaluation parameter group. For example, if the second evaluation parameter group includes the network signal strength, the network transmission status, and the type of the terminal device that are described in the foregoing content, a value of m is 3. It should be noted that a playing capability weight factor allocated to each evaluation parameter may be obtained based on historical experience, or may be customized, and may be adjusted in time.

Based on the foregoing descriptions of the transit capability, the playing capability, and the transit availability of the N second terminal devices relative to the first terminal device, the procedure shown in FIG. 7 may include the following steps.

S701a: The first terminal device updates a transit capability evaluation value.

For example, the first terminal device may periodically update the transit capability evaluation value based on a first evaluation parameter group. An update period may also be dynamically adjusted based on a multi-device synchronous audio playing scenario. For example, in a period in which the first terminal device is frequently used, the update period may be set to a short interval. In a period in which the first terminal device is infrequently used, the update period may be set to a long interval. For example, an update period in a time period at night may be set to several minutes, and an update period in the early morning may be set to several hours. In this way, the transit capability evaluation value of the first terminal device is dynamically updated, to improve accuracy of the transit capability of the first terminal device serving as a transit node, and further ensure a playing capability of another terminal device that selects the first terminal device as a data source for obtaining the to-be-played audio data. Therefore, this can improve smoothness and stability of audio playing in the multi-device synchronous audio playing scenario can be improved, and improve user experience.

S702a: If the transit capability evaluation value of the first terminal device is greater than a transit capability threshold, continue to perform S703a; otherwise, continue to perform S707. The first terminal device may preset the transit capability threshold, and the transit capability threshold may be used as an evaluation basis for determining whether the first terminal device can publish a transit service. Optionally, the transit capability threshold may be determined based on a historical empirical value. For example, it may be obtained, based on statistics on historical data in the multi-device synchronous audio playing scenario, or analysis of experimental data, that when the transit capability evaluation value is greater than the transit capability threshold, better user experience and the like may be obtained in the application scenario.

S703a: The first terminal device publishes the transit service, and determines that the first terminal device is a transit role. After the first terminal device publishes the transit service, the first terminal device with the transit service may be found by another terminal device, so that the first terminal device serves as a transmission path for the another terminal a device to obtain the to-be-played audio data. This provides a plurality of possible transmission paths, so that a plurality of terminal devices obtain the to-be-played audio data from the data source in the multi-device synchronous audio playing scenario.

In a possible implementation, the first terminal device may publish the transit service in a service availability registration and discovery manner or a broadcast or multicast packet manner. The transit service may be, for example, the transit capability evaluation value.

It should be noted that an execution sequence of S701b to S706 and S701a to S703a is not limited. Optionally, S701b to S706 and S701a to S703a may be performed in parallel.

S701b: The first terminal device updates the playing capability evaluation value. The first terminal device updates the playing capability evaluation value in a manner similar to a manner of updating the transit capability evaluation value. The first terminal device may also periodically update the playing capability evaluation value, to evaluate the playing capability of the first terminal device in an accurate and timely manner. This can ensure synchronous playing efficiency of the multi-device synchronous audio playing scenario.

S702b: If the playing capability evaluation value of the first terminal device is greater than a playing capability threshold, continue to perform S707; otherwise, continue to perform S703b. The playing capability threshold is similar to the transit capability threshold, and may also be preset. Details are not described herein again. It should be noted that, in this embodiment, a larger playing capability evaluation value of the first terminal device indicates a stronger playing capability of the first terminal device, and a smaller playing capability evaluation value of the first terminal device indicates a weaker playing capability of the first terminal device. During actual implementation, another possible correlation, for example, a negative correlation, may exist. In this case, S702b may be correspondingly changed.

S703b: The first terminal device searches for the N second terminal devices that publish a transit service. When the first terminal device determines that the current playing capability cannot meet the preset playing capability threshold, it indicates that a transmission status of a current transmission path for obtaining the to-be-played audio data is poor. In this case, the first terminal device may start a processing procedure of switching a target transmission path. This may be implemented as follows: The first terminal device first determines the N second terminal devices that may provide transmission paths for the first terminal device.

It should be noted that the procedure shown in FIG. 7 is also applicable to a scenario in which the first terminal device is initially started. In this case, the first terminal device may not have a current transmission path, and the first terminal device may also determine a transmission path selected for the first time by using a processing procedure from S703b to S706. In addition, after selecting the transmission path for the first time, the first terminal device may store, as a default transmission path, the transmission path selected for the first time. Subsequently, after the first terminal device is started, the first terminal device obtains to-be-played transmission data by using the default transmission path, so that the first terminal device can improve processing efficiency in the multi-device synchronous audio playing scenario.

S704: The first terminal device performs transit availability analysis on each second terminal device. For an implementation process in which the first terminal device performs transit availability analysis, refer to the implementation process described with reference to FIG. 5. Details are not described herein again in this application.

S705: If the first terminal device determines that N second terminal devices whose transit availability is greater than a transit availability threshold exist in the second terminal devices, continue to perform S706; otherwise, continue to perform S707. The transit availability threshold is similar to the transit capability threshold, and may also be preset. Details are not described herein again. Optionally, that the transit availability is greater than the transit availability threshold indicates that obtaining the to-be-played audio data by using the transmission path corresponding to the second terminal device may meet a basic requirement of multi-device synchronous audio playing. For example, time spent in obtaining the to-be-played audio data by using the transmission path is less than a set maximum time consumption threshold requirement.

S706: The first terminal device switches the target transmission path, and determines that the first terminal device is an end playing role.

For example, the first terminal device analyzes a plurality of pieces of transit availability, and if there is a target transmission path that can meet the basic requirement of multi-device synchronous audio playing, the first terminal device switches, based on a result of determining that the current playing capability of the first terminal device is poor in S702b, the target transmission path for obtaining the to-be-played audio data by the first terminal device. This can improve data obtaining efficiency of the first terminal device, reduce time spent in obtaining the data, and reduce impact of the first terminal device on bucket effect of the multi-device synchronous audio playing scenario.

In addition, after processing in S701b to S706 is performed, it may be determined that the capability of the first terminal device in obtaining the to-be-played audio data is poor, and the first terminal device may be determined as the end playing role, namely, the end terminal device described in the foregoing embodiment. It may be understood that smoothness and the like of multi-device synchronous audio playing depends much on impact of a terminal device as an end playing role in the multi-device synchronous audio playing scenario. Therefore, efficiency of obtaining the to-be-played audio data by the end playing role may be improved, and time spent in obtaining the to-be-played audio data may be reduced, to improve user experience of multi-device synchronous audio playing.

In a possible implementation, before and after the first terminal device switches the target transmission path, a data packet including the to-be-played audio data includes different source addresses.

S707: The first terminal device is determined as a common playing role. The terminal device as the common playing role may basically meet a requirement of multi-device synchronous audio playing, and participate in implementation of the multi-device synchronous audio playing scenario. Compared with the terminal device as the end playing role, the terminal device as the common playing role may have less negative impact on multi-device synchronous audio playing. It should be noted that the first terminal device may also be determined as both a transit role and a common playing role.

Based on the descriptions of the foregoing embodiments, in embodiments of this application, terminal devices included in the multi-device synchronous audio playing scenario are classified into different roles, so that different processing is more accurately performed on different terminal devices. For example, for the terminal device as the end playing role, it is considered that the terminal device has large impact on playing experience, and efficiency of obtaining the to-be-played audio data by the end playing role may be improved, to reduce impact on playing experience. In addition, during implementation of this application, a personalized reminder may further be customized for a user based on the terminal device as the end playing role. For example, when the terminal device as the end playing role is identified, a prompt that the terminal device may affect synchronous playing experience may be sent to the user, and an operation instruction for asking the user whether to remove the terminal device from a current multi-device synchronous audio playing scenario is queried. The prompt may be represented in a form of a short message, a phone call, a pop-up window, or the like. This is not limited in this application.

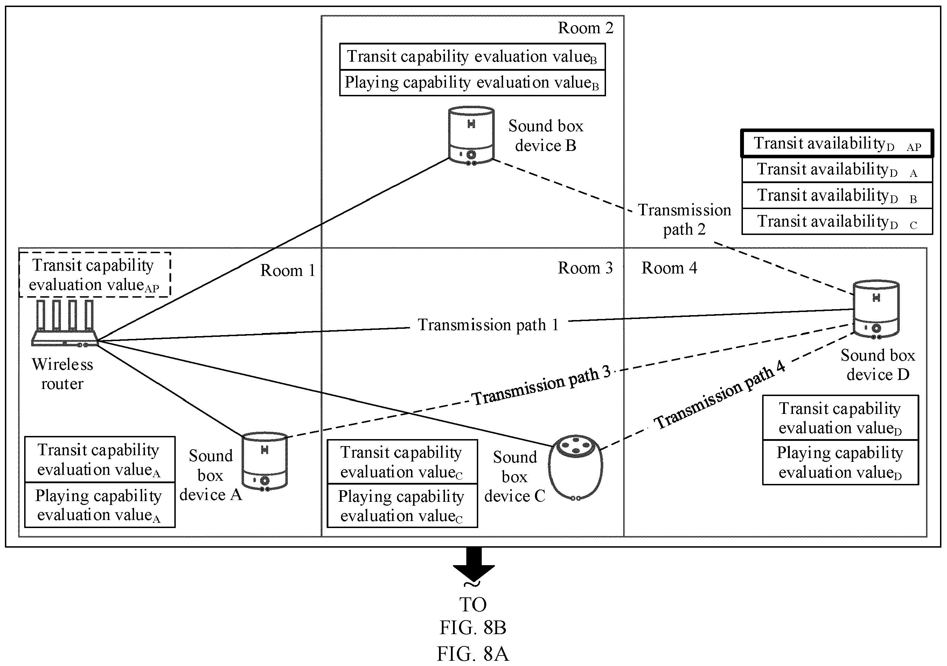

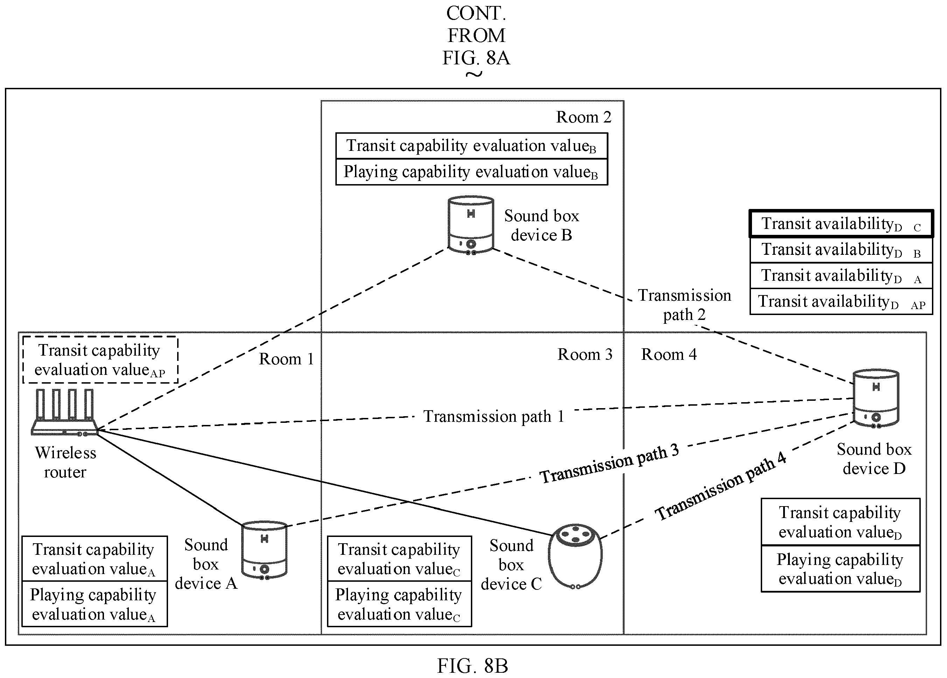

For ease of understanding, FIG. 8A and FIG. 8B are another schematic diagram of an application scenario of a multi-device synchronous playing method according to an embodiment of this application. It may be understood that a terminal device included in the application scenario may have a corresponding transit capability evaluation value and a corresponding playing capability evaluation value. Because a wireless router usually does not participate in audio playing, a playing capability evaluation value may not need to be determined. For example, the sound box device D is used as a first terminal device. The sound box device D may further determine, based on transit capability evaluation values of a plurality of second terminal devices, transit availability of the plurality of second terminal devices relative to the sound box device D, to obtain a transit availability list shown in FIG. 8A and FIG. 8B, so as to switch a target transmission path.

After the sound box device D is started, a default transmission path may usually be a transmission path 1 shown in FIG. 8A and FIG. 8B, that is, to-be-played audio data may be obtained from the wireless router.

In a running process of the sound box device D, the transit capability evaluation value and the playing capability evaluation value may be periodically updated based on the content described in FIG. 7, to evaluate a role of the sound box device D at different moments. For example, the sound box device D may serve as a common playing role at a moment T1, and after the to-be-played audio data is obtained by using the transmission path 1, multi-device synchronous playing may be implemented together with another sound box device. At a moment T2, the sound box device D may further serve as a transit role based on the common playing role. In this case, the sound box device D may publish a transit service, and may provide an optional transmission path for another terminal device (for example, an end playing device).

For another example, the sound box device D determines, according to a playing capability evaluation value updated at a moment T3, that a playing capability evaluation value of the sound box device D is no longer greater than a playing capability threshold. In this case, the sound box device D determines, based on content shown in S703b to S705, whether a target transmission path needs to be switched. If the sound box device D determines that the target transmission path needs to be switched, the target transmission path may be determined based on the transit availability of the plurality of second terminal devices relative to the sound box device D. For example, if a value of transit availability$_{D \leftarrow C}$ shown in FIG. 8A and FIG. 8B meets a preset transit capability threshold condition, the sound box device D may switch from the transmission path 1 to a transmission path 4 for obtaining the to-be-played audio data.

It may be understood that, in the running process of the sound box device D, dynamic analysis of the target transmission path may be implemented based on the implementation shown in FIG. 7, to switch the target transmission path in a timely and accurate manner. This can ensure efficiency, stability, and reliability of obtaining the to-be-played audio data by the terminal device.

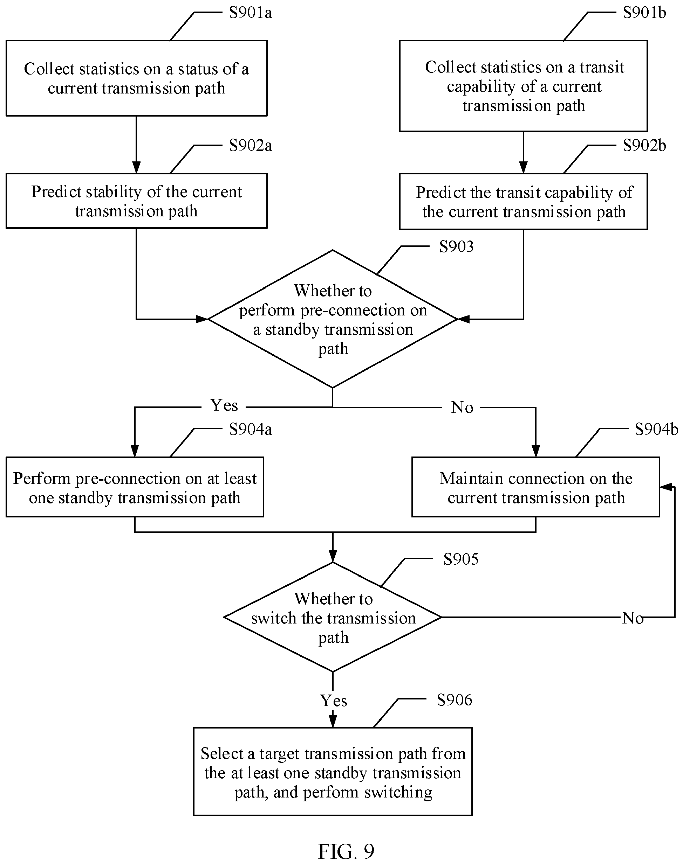

In another optional implementation, FIG. 9 is another schematic flowchart of a multi-device synchronous playing method according to an embodiment of this application. In this implementation, the first terminal device is still used as an example. In a processing process in which the first terminal device performs multi-device synchronous playing, long-term status monitoring and data learning analysis may further be performed on processing data generated through multi-device synchronous playing performed by the first terminal device. Stability and a transit capability of a current transmission path of the first terminal device may be predicted and analyzed based on a long-term status monitoring result and a data learning analysis result of the first terminal device, to select or switch to an appropriate transmission path for the first terminal device in a timely and accurate manner. This can ensure stability and smoothness of audio playing and user experience in a multi-device audio synchronous playing scenario. A specific processing procedure of this embodiment includes the following steps.

S901a: The first terminal device collects statistics on a status of the current transmission path. For example, the first terminal device collects first processing data generated through multi-device synchronous playing processing performed by using the current transmission path. The first processing data indicates stability of the status of the current transmission path. For example, the first processing data may include information such as a load status, a network status, historical power-on time, historical power-off time, or historical startup time of a data source terminal device (for example, in FIG. 8A and FIG. 8B, when the sound box device D obtains to-be-played audio data by using the transmission path 4, the data source terminal device is the sound box device C) of the to-be-played audio data.

During specific implementation, the first terminal device may collect the first processing data in a specified time period. For example, the first terminal device collects first processing data of the last week, or the first terminal device further collects first processing data from 8:00 a.m. to 11:00 p.m. of the last week. In this way, the first terminal device may collect historical first processing data for long-term status monitoring and prediction, to improve prediction accuracy and timeliness, and avoid excessive occupation of processing performance of the first terminal device due to excessively high load.

S902a: The first terminal device predicts stability of the current transmission path. Optionally, the first terminal device may predict the stability of the current transmission path according to a time-series learning algorithm, that is, the first terminal device predicts whether the current transmission path can be normally used or stably used in a future time period. During implementation, the first terminal device may perform prediction based on a stability evaluation value. The stability evaluation value may be determined based on one or a combination of the following information: a power-off confidence, a load status (for example, CPU usage), and a network status (for example, a transmission rate and transmission bandwidth).

The power-off confidence may indicate whether the terminal device is to be powered off. If the power-off confidence increases, it indicates that a probability that the current transmission path cannot be normally used increases. With reference to the diagram of the application scenario shown in FIG. 8A and FIG. 8B, if the current transmission path of the sound box device D is the transmission path 4, that is, a transmission path corresponding to the sound box device C, a power-off confidence of the sound box device C may be predicted based on a statistical result of the status of the current transmission path and the historical first processing data in S901a. In this way, the first terminal device may perform processing in S903 based on the power-off confidence obtained through prediction. A specific processing rule is described in S903 below. Details are not described herein.

S901b: The first terminal device collects statistics on a transit capability of a second terminal device corresponding to the current transmission path. For example, the first terminal device collects second processing data generated through multi-device synchronous playing processing performed by using the current transmission path. The second processing data indicates the transit capability, for example, the transit capability evaluation value described in the foregoing embodiment, of the second terminal device corresponding to the current transmission path. Similar to the first processing data, the second processing data may also be collected by collecting data that is generated in specific time, so that the collected historical second processing data may be used as a sample for statistics collection, to predict a transit capability of the current transmission path.

S902b: The first terminal device predicts the transit capability of the current transmission path. Optionally, the first terminal device may predict the transit capability of the current transmission path according to the time-series learning algorithm, that is, the first terminal device predicts a transit capability of a terminal device corresponding to the current transmission path in a future time period. For example, with reference to the diagram of the application scenario shown in FIG. 8A and FIG. 8B, if the current transmission path of the sound box device D is the transmission path 4, an estimated transit capability evaluation value of the sound box device C in a future time period based on the historical second processing data and a statistical result, obtained in S901b, of the transit capability of the current transmission path. In this way, the first terminal device may perform processing in S903 based on the estimated transit capability evaluation value obtained through prediction. A specific processing rule is described in S903 below. Details are not described herein.

S903: The first terminal device determines whether to perform standby transmission path pre-connection; and if yes, continues to perform S904a; otherwise, continues to perform S904b. According to S901a, S902a, S901b, and S902b, the first terminal device may separately obtain the stability evaluation value and the transit capability evaluation value of the current transmission path in the future time period (or a future moment).

In a possible example, when determining that the stability evaluation value of the current transmission path is greater than a stability threshold after first duration (or at a future first moment), the first terminal device determines to perform standby transmission path pre-connection. In this example, a larger stability evaluation value indicates larger fluctuation of the current transmission path, that is, the current transmission path is more unstable. If a smaller stability evaluation value indicates that the current transmission path is more unstable, the stability evaluation value may be changed from being greater than the stability threshold to being less than the stability threshold.

In another possible example, when determining that the transit capability evaluation value of the current transmission path is less than or equal to a transit capability threshold after second duration (or at a future second moment), the first terminal device determines to perform standby transmission path pre-connection.

The second duration may be the same as or different from the first duration. For example, during implementation of this application, the second duration may be set to be longer than the first duration. That a terminal device that establishes the current transmission path is powered off usually indicates that the terminal device cannot transmit the to-be-played audio data for the first terminal device before the terminal device is powered on next time. Therefore, if it is predicted that the stability evaluation value is high, it may be determined that standby transmission path pre-connection needs to be performed. However, the terminal device that establishes the current transmission path may have a poor transit capability temporarily, and the transit capability may recover after a time period. Therefore, to improve stability of the transmission path, other duration is prolonged after the first duration, if it is still predicted that the terminal device corresponding to the current transmission path has a poor transit capability, it is determined that standby transmission path pre-connection needs to be performed.

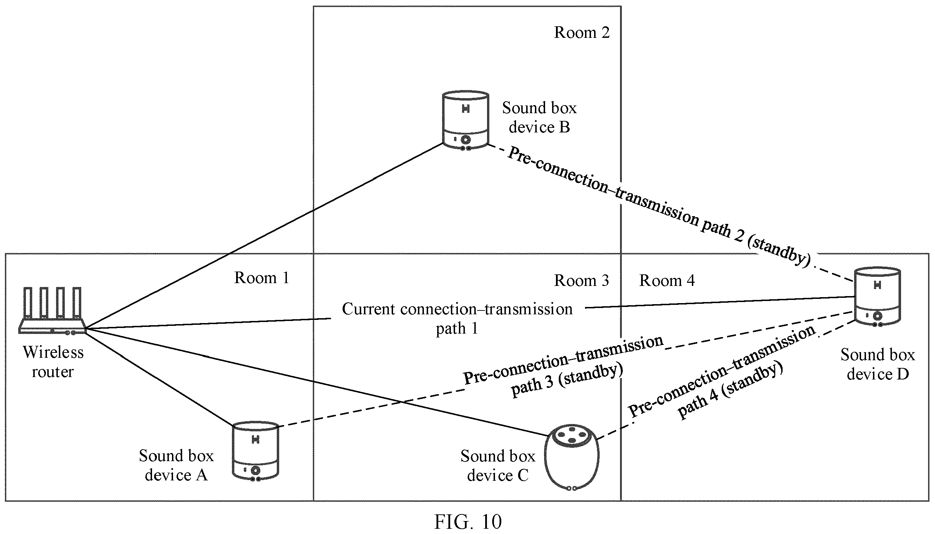

S904a: The first terminal device performs pre-connection on at least one standby transmission path. For example, FIG. 10 is another schematic diagram of an application scenario of multi-device synchronous playing according to an embodiment of this application. The sound box device D is used as an example. The current transmission path is the transmission path 1 established by using the wireless router. Determining that standby transmission path pre-connection needs to be performed in S903 may also be understood as establishing a physical transmission channel corresponding to the standby transmission path. In this case, the sound box device D may perform pre-connection on the transmission path 2, the transmission path 3, and the transmission path 4, to serve as a standby transmission path of the transmission path 1. In other words, the sound box device D may separately send a request for establishing a physical transmission channel to the sound box device A, the sound box device B, and the sound box device C. For example, the sound box device D initiates a Bluetooth connection request to the sound box device B, and after a Bluetooth connection is established, it indicates that a physical transmission channel is established. The sound box device D initiates a Wi-Fi direct connection request to the sound box device A, and after a Wi-Fi direct connection is established, it indicates that a physical transmission channel is established.

It should be noted that, during implementation of this application, only one or more standby transmission paths with good transit availability may be pre-connected, and there is no need to connect all transmission paths that meet transit availability, to avoid an increase in processing load. In addition, before the first terminal device switches the target transmission path from the current transmission path to the standby transmission path, the to-be-played audio data is not transmitted on the standby transmission path.

S904b: The first terminal device maintains connection on the current transmission path. For example, if the first terminal device determines that the current transmission path can meet a capability for transmitting the to-be-played audio data in the future time period, the first terminal device may continue to maintain connection on the current transmission path, and wait for next determining. It should be noted that the processing procedure shown in FIG. 9 may also be performed periodically, to ensure stability of a multi-device synchronous audio playing scenario.

S905: The first terminal device determines whether to switch from the current transmission path to the standby transmission path. Based on the prediction in the foregoing step content, the first terminal device may perform pre-connection processing on the standby transmission path in advance for an exception that may exist in the current transmission path in the future time period. To switch the transmission path in a more accurate and timely manner based on the stability and the transit capability of the current transmission path, the first terminal device may further instantly detect current stability and a current transit capability of the current transmission path. If it is determined that a transmission path switching condition is met, the first terminal device continues to perform S906; otherwise, the first terminal device returns to perform S904b.

For example, if the first terminal device detects that the transmission status of the current transmission path is interrupt (the terminal device used as a data source may be powered off), the first terminal device determines to switch the transmission path. For another example, if the first terminal device detects that the transit capability of the terminal device of the current transmission path becomes worse and is less than or equal to the transit capability threshold, the first terminal device determines to switch the transmission path.

S906: The first terminal device selects the target transmission path from the at least one standby transmission path, and performs switching. In the diagram of the application scenario shown in FIG. 10, the first terminal device may select, as the target transmission path, one transmission path from the transmission path 2, the transmission path 3, and the transmission path 4 that are used as standby transmission paths. For example, the sound box device D switches from the transmission path 1 for obtaining the to-be-played audio data to the (standby) transmission path 4 for obtaining the to-be-played audio data.

In the implementation shown in FIG. 9, the terminal device can pre-establish the standby transmission path by predicting the current transmission path. Therefore, when it is detected that the current status of the current transmission path is poor, the transmission path can be quickly switched, to improve smoothness and stability of audio playing in the multi-device synchronous audio playing scenario, reduce longest time spent by a plurality of devices in obtaining the to-be-played audio data, and improve user experience.

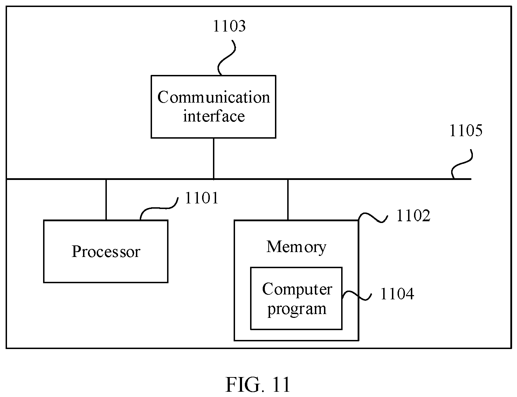

Based on a same technical concept, FIG. 11 shows a terminal device 1100 according to an embodiment of this application. The terminal device 1100 includes one or more processors 1101, one or more memories 1102, a communication interface 1103, and one or more computer programs 1104. The foregoing components may be connected by using one or more communication buses 1105. The communication interface 1103 is configured to implement communication with another device (for example, a terminal device). For example, the communication interface may be a transceiver. The one or more computer programs 1104 are stored in the memory 1102 and are configured to be executed by the one or more processors 1101. The one or more computer programs 1104 include instructions, and the instructions may be used to perform the following steps:

A first terminal device obtains transit capability evaluation values of N second terminal devices, where N is a positive integer. The first terminal device obtains transit availability of the N second terminal devices relative to the first terminal device based on the N transit capability evaluation values. The first terminal device selects a target transmission path from N transmission paths based on the transit availability of the N second terminal devices relative to the first terminal device, where the N transmission paths one-to-one correspond to the N second terminal devices. The first terminal device obtains to-be-played audio data from a second terminal device corresponding to the target transmission path.

In a possible design, that the first terminal device obtains transit availability of the N second terminal devices relative to the first terminal device based on the N transit capability evaluation values may be implemented as follows: The first terminal device determines N relative signal strengths corresponding to the N second terminal devices. The first terminal device separately allocates transit availability weight factors to the N second terminal devices based on the N relative signal strengths. For an $i^{th}$ second terminal device, the first terminal device uses a product of a transit capability evaluation value and a transit availability weight factor of the $i^{th}$ second terminal device as transit availability of the $i^{th}$ terminal device, where i is any positive integer from 1 to N. Optionally, it is assumed that a larger relative signal strength of the second terminal device indicates higher transit availability of the second terminal device relative to the first terminal device. The first terminal device may allocate a larger transit availability weight factor to the second terminal device with a larger relative signal strength.

In a possible design, the first terminal device may alternatively transit the to-be-played audio data to another terminal device. This may be determined based on a transit capability evaluation value of the first terminal device. The design may be implemented as follows: The first terminal device determines a first transit capability evaluation value of the first terminal device based on a first evaluation parameter group. The first evaluation parameter group includes one or a combination of the following evaluation parameters: a network signal strength of the first terminal device, a network transmission status of the first terminal device, a type of the first terminal device, a usage status of the first terminal device, and an energized frequency of the first terminal device. If the first transit capability evaluation value meets a preset transit capability threshold condition, the first terminal device sends the first transit capability evaluation value and the like. It may be understood that before the first terminal device obtains the transit capability evaluation values of the N second terminal devices, the second terminal devices may also determine respective transit capability evaluation values by using the foregoing design.

In this design, an optional implementation in which the first terminal device determines the first transit capability evaluation value of the first terminal device based on the first evaluation parameter group is as follows: The first terminal device obtains a transit capability weight factor corresponding to each evaluation parameter included in the first evaluation parameter group. The first terminal device performs weighted summation on all evaluation parameters included in the first evaluation parameter group based on the transit capability weight factor corresponding to each evaluation parameter, to obtain the first transit capability evaluation value. Optionally, the first terminal device may alternatively use an implementation of determining the first transit capability evaluation value, for example, a machine learning manner. This is not limited in this application.

In a possible design, the first terminal device may further periodically update the first transit capability evaluation value.

In a possible design, role classification may be performed on the first terminal device, and different processing may be performed for different roles. For example, the first terminal device may be classified into a common playing role or an end playing role based on a playing capability evaluation value. The end playing role indicates that a playing capability of the first terminal device is poor. In view of this, the first terminal device determines a first playing capability evaluation value of the first terminal device based on a second evaluation parameter group. The second evaluation parameter group includes one or a combination of the following evaluation parameters: a network signal strength of the first terminal device, a network transmission status of the first terminal device, and a type of the first terminal device. Optionally, if the first terminal device determines that the first playing capability evaluation value does not meet a play capability threshold condition, the first terminal device may select the target transmission path from the N transmission paths corresponding to the N second terminal devices, to obtain the to-be-played audio data.

In a possible design, that the first terminal device selects a target transmission path from N transmission paths based on the transit availability of the N second terminal devices relative to the first terminal device may be implemented as follows: The first terminal device determines that the transit availability of the N second terminal devices relative to the first terminal device does not meet a transit capability threshold condition, and uses a current transmission path as the target transmission path. Alternatively, this may be implemented as follows: the first terminal device determines that transit availability of at least one second terminal device relative to the first terminal device meets a transit capability threshold condition, and selects the target transmission path from at least one transmission path corresponding to the at least one second terminal device. Alternatively, it may be implemented as follows: The first terminal device determines that transit availability of at least one second terminal device relative to the first terminal device meets a transit capability threshold condition, and that compared with transit availability of a second terminal device corresponding to a current transmission path relative to the first terminal device, the transit availability of the at least one second terminal device relative to the first terminal device does not meet a preset switching condition, and uses the current transmission path as the target transmission path.

In a possible design, the first terminal device may further periodically update the first playing capability evaluation value.

In a possible design, the first terminal device may further predict a current transmission path to ensure transmission efficiency and stability of the to-be-played audio data. This may be implemented as follows: The first terminal device predicts stability of the current transmission path based on first processing data, to obtain a stability evaluation value of the current transmission path at a first moment. The first processing data is obtained by the first terminal device by collecting statistics on processing data generated by using the current transmission path. The first terminal device predicts a transit capability of the current transmission path based on second processing data, to obtain a transit capability evaluation value of the current transmission path at a second moment. The second processing data is obtained by the first terminal device by collecting statistics on a transit capability evaluation value of a second terminal device corresponding to the current transmission path. If the first terminal device detects a first trigger condition, the first terminal device performs pre-connection on at least one standby transmission path. The first trigger condition includes one or a combination of the following conditions: the stability evaluation value at the first moment meets a preset stability threshold condition, and the transit capability evaluation value at the second moment meets a preset transit capability threshold condition.

In a possible design, that the first terminal device selects a target transmission path from N transmission paths includes: The first terminal device selects the target transmission path from the at least one standby transmission path.

In a possible design, that the first terminal device predicts stability of the current transmission path based on first processing data may be implemented as follows: The first terminal device predicts the stability of the current transmission path based on the first processing data by using a time-series learning algorithm. That the first terminal device predicts a transit capability of the current transmission path based on second processing data includes: The first terminal device predicts the transit capability of the current transmission path based on the second processing data by using the time-series learning algorithm.

In a possible design, the stability evaluation value is determined by using one or a combination of the following information: a power-off confidence of the second terminal device, a load status of the second terminal device, a network status of the second terminal device, and the like.

In a possible design, after obtaining the to-be-played audio data, the first terminal device may receive and respond to a playing instruction, to play the to-be-played audio data. The playing instruction instructs at least one terminal device to synchronously play the to-be-played audio data, and the at least one terminal device includes the first terminal device and the N second terminal devices.

Based on the descriptions of the foregoing implementations, a person skilled in the art may clearly understand that, for the purpose of convenient and brief description, division of the foregoing functional modules is merely used as an example for description. In an actual application, the foregoing functions may be allocated to different functional modules for implementation based on a requirement, that is, an inner structure of the apparatus is divided into different functional modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in embodiments of this application essentially, or the part contributing to conventional technologies, or all or some of the technical solutions may be implemented in a form of a software product. The computer software product is stored in a storage medium, and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

**Claims**

1. A multi-device synchronous playing method, wherein the method comprises:

   obtaining, by a first terminal device, transit capability evaluation values of N second terminal devices, wherein N is a positive integer;
   obtaining, by the first terminal device, transit availability of the N second terminal devices relative to the first terminal device based on the N transit capability evaluation values;
   selecting, by the first terminal device, a target transmission path from N transmission paths based on the transit availability of the N second terminal devices relative to the first terminal device, wherein the N transmission paths one-to-one correspond to the N second terminal devices; and
   obtaining, by the first terminal device, to-be-played audio data from a second terminal device corresponding to the target transmission path.

2. The method according to claim 1, wherein the obtaining, by the first terminal device, transit availability of the N second terminal devices relative to the first terminal device based on the N transit capability evaluation values comprises:

   determining, by the first terminal device, N relative signal strengths corresponding to the N second terminal devices;
   separately allocating, by the first terminal device, transit availability weight factors to the N second terminal devices based on the N relative signal strengths; and
   for an $i^{th}$ second terminal device, using, by the first terminal device, a product of a transit capability evaluation value and a transit availability weight factor of the $i^{th}$ second terminal device as transit availability of the $i^{th}$ terminal device, wherein i is any positive integer from 1 to N.

3. The method according to claim 1 or 2, wherein the method further comprises:

   determining, by the first terminal device, a first transit capability evaluation value of the first terminal device based on a first evaluation parameter group, wherein the first evaluation parameter group comprises one or a combination of the following evaluation parameters: a network signal strength of the first terminal device, a network transmission status of the first terminal device, a type of the first terminal device, a usage status of the first terminal device, and an energized frequency of the first terminal device; and
   if the first transit capability evaluation value meets a preset transit capability threshold condition, sending, by the first terminal device, the first transit capability evaluation value.

4. The method according to claim 3, wherein the determining, by the first terminal device, a first transit capability evaluation value of the first terminal device based on a first evaluation parameter group comprises:

   obtaining, by the first terminal device, a transit capability weight factor corresponding to each evaluation parameter comprised in the first evaluation parameter group; and
   performing, by the first terminal device, weighted summation on all evaluation parameters comprised in the first evaluation parameter group based on the transit capability weight factor corresponding to each evaluation parameter, to obtain the first transit capability evaluation value.

5. The method according to claim 3 or 4, wherein the method further comprises:
   periodically updating, by the first terminal device, the first transit capability evaluation value.

6. The method according to claim 1 or 2, wherein before the obtaining, by a first terminal device, transit capability evaluation values of N second terminal devices, the method further comprises:

determining, by the first terminal device, a first playing capability evaluation value of the first terminal device based on a second evaluation parameter group, wherein the second evaluation parameter group comprises one or a combination of the following evaluation parameters: a network signal strength of the first terminal device, a network transmission status of the first terminal device, and a type of the first terminal device; and determining, by the first terminal device, that the first playing capability evaluation value does not meet a playing capability threshold condition.

7. The method according to claim 1 or 6, wherein the selecting, by the first terminal device, a target transmission path from N transmission paths based on the transit availability of the N second terminal devices relative to the first terminal device comprises:

determining, by the first terminal device, that the transit availability of the N second terminal devices relative to the first terminal device does not meet a transit capability threshold condition, and using, by the first terminal device, a current transmission path as the target transmission path; determining, by the first terminal device, that transit availability of at least one second terminal device relative to the first terminal device meets a transit capability threshold condition, and selecting, by the first terminal device, the target transmission path from at least one transmission path corresponding to the at least one second terminal device; or determining, by the first terminal device, that transit availability of at least one second terminal device relative to the first terminal device meets a transit capability threshold condition, and that compared with transit availability of a second terminal device corresponding to a current transmission path relative to the first terminal device, the transit availability of the at least one second terminal device relative to the first terminal device does not meet a preset switching condition, and using, by the first terminal device, the current transmission path as the target transmission path.

8. The method according to claim 6 or 7, wherein the method further comprises: periodically updating, by the first terminal device, the first playing capability evaluation value.

9. The method according to claim 1, wherein the method further comprises:

predicting, by the first terminal device, stability of a current transmission path based on first processing data, to obtain a stability evaluation value of the current transmission path at a first moment, wherein the first processing data is obtained by the first terminal device by collecting statistics on processing data generated by using the current transmission path; predicting, by the first terminal device, a transit capability of the current transmission path based on second processing data, to obtain a transit capability evaluation value of the current transmission path at a second moment, wherein the second processing data is obtained by the first terminal device by collecting statistics on a transit capability evaluation value of a second terminal device corresponding to the current transmission path; and detecting, by the first terminal device, a first trigger condition, and performing pre-connection on at least one standby transmission path, wherein the first trigger condition comprises one or a combination of the following conditions: the stability evaluation value at the first moment meets a preset stability threshold condition, and the transit capability evaluation value at the second moment meets a preset transit capability threshold condition.

10. The method according to claim 9, wherein the selecting, by the first terminal device, a target transmission path from N transmission paths comprises: selecting, by the first terminal device, the target transmission path from the at least one standby transmission path.

11. The method according to claim 9, wherein the predicting, by the first terminal device, stability of a current transmission path based on first processing data comprises:

predicting, by the first terminal device, the stability of the current transmission path based on the first processing data by using a time-series learning algorithm; and the predicting, by the first terminal device, a transit capability of the current transmission path based on second processing data comprises: predicting, by the first terminal device, the transit capability of the current transmission path based on the second processing data by using the time-series learning algorithm.

12. The method according to any one of claims 9 to 11, wherein the stability evaluation value is determined by using one or a combination of the following information: a power-off confidence of the second terminal device, a load status of the second terminal device, and a network status of the second terminal device.

13. The method according to any one of claims 1 to 12, wherein the method further comprises:
receiving and responding to, by the first terminal device, a playing instruction, to play the to-be-played audio data, wherein the playing instruction instructs at least one terminal device to synchronously play the to-be-played audio data, and the at least one terminal device comprises the first terminal device and the N second terminal devices.

14. A terminal device, comprising one or more processors and one or more memories, wherein

the one or more memories are configured to store one or more computer programs and data information, wherein the one or more computer programs comprise instructions; and
when the instructions are executed by the one or more processors, the terminal device is enabled to perform the method according to any one of claims 1 to 13.

15. A communication system, comprising at least one terminal device according to claim 14.

16. A computer-readable storage medium, wherein the computer-readable storage medium is configured to store a computer program, and when the computer program is run on a computer, the computer is enabled to perform the method according to any one of claims 1 to 13.

17. A computer program product, comprising a computer program, wherein when the computer program is run on a computer, the computer is enabled to perform the method according to any one of claims 1 to 13.

18. A graphical user interface on a terminal device, wherein the terminal device comprises a display, a memory, and a processor, the processor is configured to execute one or more computer programs stored in the memory, and the graphical user interface comprises a graphical user interface displayed when the terminal device performs the method according to any one of claims 1 to 13.

FIG. 1

FIG. 2

FIG. 3

Room 2

Sound box
device B

Transmission path 2

Room 1

Transmission path 1

Room 3 | Room 4

Wireless
router

Sound box
device D

Transmission path 3

Transmission path 4

Sound box
device A

Sound box
device C

FIG. 4

First terminal
device

Second
terminal
devices 1, ...,
and N

S501: Obtain transit capability evaluation
values of the N second terminal devices

S502: Obtain transit availability of the N second terminal
devices relative to the first terminal device based on the N
transit capability evaluation values

S503: Select a target transmission path from N transmission
paths based on the transit availability of the N second
terminal devices relative to the first terminal device, where
the N transmission paths one-to-one correspond to the N
second terminal devices

S504: Obtain to-be-played audio data
from a second terminal device
corresponding to the target
transmission path

FIG. 5

FIG. 6

FIG. 7

EP 4 366 244 A1

**Room 2**

| Transit capability evaluation value$_B$ |
| Playing capability evaluation value$_B$ |

Sound box device B

| **Transit availability$_{D\_AP}$** |
| Transit availability$_{D\_A}$ |
| Transit availability$_{D\_B}$ |
| Transit availability$_{D\_C}$ |

Transmission path 2

| Transit capability evaluation value$_{AP}$ |

**Room 1**

**Room 3** **Room 4**

Transmission path 1

Wireless router

Transmission path 3

Transmission path 4

Sound box device D

| Transit capability evaluation value$_A$ |
| Playing capability evaluation value$_A$ |

Sound box device A

| Transit capability evaluation value$_C$ |
| Playing capability evaluation value$_C$ |

Sound box device C

| Transit capability evaluation value$_D$ |
| Playing capability evaluation value$_D$ |

TO
FIG. 8B

FIG. 8A

Room 2

| Transit capability evaluation value$_B$ |
| Playing capability evaluation value$_B$ |

Sound box
device B

| Transit availability$_{D\ C}$ |
| Transit availability$_{D\ B}$ |
| Transit availability$_{D\ A}$ |
| Transit availability$_{D\ AP}$ |

Transmission
path 2

| Transit capability
evaluation value$_{AP}$ |

Room 1

Room 3  Room 4

Transmission path 1

Wireless
router

Transmission path 3

Transmission path 4

Sound box
device D

| Transit capability
evaluation value$_A$ |
| Playing capability
evaluation value$_A$ |

Sound
box
device A

| Transit capability
evaluation value$_C$ |
| Playing capability
evaluation value$_C$ |

Sound
box
device C

| Transit capability
evaluation value$_D$ |
| Playing capability
evaluation value$_D$ |

EP 4 366 244 A1

FIG. 8B

S901a

Collect statistics on a status of a
current transmission path

S902a

Predict stability of the current
transmission path

S901b

Collect statistics on a transit
capability of a current
transmission path

S902b

Predict the transit capability of
the current transmission path

S903

Whether to
perform pre-connection on
a standby transmission
path

Yes — — No

S904a

Perform pre-connection on at least
one standby transmission path

S904b

Maintain connection on the
current transmission path

S905

Whether to
switch the transmission
path

No

Yes

S906

Select a target transmission path from
the at least one standby transmission
path, and perform switching

FIG. 9

Room 2

Sound box device B

Pre-connection–transmission path 2 (standby)

Room 1

Room 3 | Room 4

Current connection–transmission path 1

Wireless router

Pre-connection–transmission path 3 (standby)

Pre-connection–transmission path 4 (standby)

Sound box device D

Sound box device A

Sound box device C

FIG. 10

FIG. 11

## INTERNATIONAL SEARCH REPORT

| | International application No. |
|---|---|
| | **PCT/CN2022/111117** |

| **A.** | **CLASSIFICATION OF SUBJECT MATTER** |
|---|---|

H04L 12/28(2006.01)i

According to International Patent Classification (IPC) or to both national classification and IPC

| **B.** | **FIELDS SEARCHED** |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; DWPI; EPTXT; USTXT; WOTXT; IEEE: 同步, 播放, 中继, 转发, 音箱, 音响, 设备, 终端, 选, 确定, 信号强度, 负载, 耗时, 带电频率, 卡顿, 性能, 信道, 链路, 带宽, 抖动, 延时, 时延, synchronization, relay, terminal, device, music, audio, sound, RSSI, signal, strength, channel, load, bandwidth, performance, link, select, determine, choose

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 104684042 A (SHENZHEN COOLPAD TECHNOLOGIES CO., LTD.) 03 June 2015 (2015-06-03)<br>description, paragraphs [0080]-[0159], and figures 1-9 | 1-18 |
| X | CN 107172672 A (CHINA INTERNET NETWORK INFORMATION CENTER) 15 September 2017 (2017-09-15)<br>description, paragraphs [0021]-[0059], and figures 1-3 | 1-18 |
| A | CN 112335188 A (INTEL CORP.) 05 February 2021 (2021-02-05)<br>entire document | 1-18 |
| A | JP H09222848 A (NTT DATA TSUSHIN KK) 26 August 1997 (1997-08-26)<br>entire document | 1-18 |
| A | US 2018220353 A1 (VOXP PTE LTD.) 02 August 2018 (2018-08-02)<br>entire document | 1-18 |
| A | US 2016105344 A1 (BELKIN INTERNATIONAL, INC.) 14 April 2016 (2016-04-14)<br>entire document | 1-18 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **08 September 2022** | **28 September 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

EP 4 366 244 A1

**INTERNATIONAL SEARCH REPORT**
**Information on patent family members**

International application No.

**PCT/CN2022/111117**

| Patent document cited in search report | | | Publication date (day/month/year) | Patent family member(s) | | | Publication date (day/month/year) |
|---|---|---|---|---|---|---|---|
| CN | 104684042 | A | 03 June 2015 | WO | 2016145677 | A1 | 22 September 2016 |
| | | | | CN | 104684042 | B | 01 February 2019 |
| CN | 107172672 | A | 15 September 2017 | CN | 107172672 | B | 03 April 2020 |
| CN | 112335188 | A | 05 February 2021 | WO | 2020114651 | A1 | 11 June 2020 |
| | | | | US | 2021297128 | A1 | 23 September 2021 |
| | | | | EP | 3664310 | A1 | 10 June 2020 |
| JP | H09222848 | A | 26 August 1997 | None | | | |
| US | 2018220353 | A1 | 02 August 2018 | WO | 2017018936 | A1 | 02 February 2017 |
| | | | | PH | 12018500188 | A1 | 30 July 2018 |
| | | | | US | 10813031 | B2 | 20 October 2020 |
| US | 2016105344 | A1 | 14 April 2016 | US | 2016105345 | A1 | 14 April 2016 |
| | | | | US | 2016105359 | A1 | 14 April 2016 |
| | | | | US | 9762458 | B2 | 12 September 2017 |
| | | | | US | 10158539 | B2 | 18 December 2018 |
| | | | | US | 9819556 | B2 | 14 November 2017 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110993559